(19) Europäisches Patentamt
European Patent Office
Office européen des brevets

(11) **EP 4 304 189 A1**

(12) **EUROPÄISCHE PATENTANMELDUNG**

(43) Veröffentlichungstag:
**10.01.2024  Patentblatt 2024/02**

(21) Anmeldenummer: **23184290.7**

(22) Anmeldetag: **07.07.2023**

(51) Internationale Patentklassifikation (IPC):
**H04N 23/62** (2023.01)     **G03B 13/18** (2021.01)
**G03B 13/30** (2021.01)     **G03B 13/32** (2021.01)
**G03B 17/20** (2021.01)     **H04N 23/63** (2023.01)
**H04N 23/67** (2023.01)

(52) Gemeinsame Patentklassifikation (CPC):
**H04N 23/67; G03B 13/18; G03B 13/30;
G03B 13/32; G03B 17/20; H04N 23/62;
H04N 23/632; H04N 23/635**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **08.07.2022  DE 102022207014**

(71) Anmelder: **Arnold & Richter Cine Technik GmbH
& Co.
Betriebs KG
80807 München (DE)**

(72) Erfinder:
• **Seybold, Tamara
80335 München (DE)**
• **Ajayi-Scheuring, Christine
1030 Wien (AT)**
• **Haubmann, Michael
1230 Wien (AT)**

(74) Vertreter: **Isarpatent
Patent- und Rechtsanwälte Barth
Charles Hassa Peckmann & Partner mbB
Friedrichstrasse 31
80801 München (DE)**

(54) **KAMERA-ASSISTENZSYSTEM**

(57)     Kamera-Assistenzsystem (1) mit einer Bildverarbeitungseinheit (2), welche ein von einer Kamera (5) empfangenes Kamerabild (KB) eines Aufnahmemotives (AM) zur Erzeugung eines Nutz-Kamerabildes (NKB) verarbeitet, wobei das von der Kamera (5) empfangene Kamerabild (KB) auf eine virtuelle dreidimensionale Projektionsfläche (PF) projiziert wird, deren Höhenwerte einer lokalen Abbildungsschärfe (AS) des empfangenen Kamerabildes (KB) entspricht; und mit einer Anzeigeeinheit (3), welche das von der Bildverarbeitungseinheit (2) auf die virtuelle dreidimensionale Projektionsfläche (PF) projizierte Kamerabild (KB) anzeigt.

FIG 1

EP 4 304 189 A1

## Beschreibung

Die vorliegende Erfindung betrifft ein Kamera-Assistenzsystem sowie ein Verfahren zur Unterstützung bei der Fokussierung einer Kamera mithilfe eines derartigen Kamera-Assistenzsystems.

Bei der professionellen Nutzung von Bewegtbild-Kameras erfolgt die Fokussierung eines Kameraobjektivs der Bewegtbild-Kamera üblicherweise nicht vollautomatisch, sondern zumindest teilweise manuell. Ein Hauptgrund dafür, dass die Fokussierung des Kameraobjektivs manuell durchgeführt wird, besteht darin, dass nicht alle Abstandsebenen der in dem Blickfeld des Kameraobjektivs befindlichen mittels der Bewegtbild-Kamera erfassten Szenerie scharf abgebildet werden sollen. Zur Lenkung der Aufmerksamkeit eines Betrachters auf einen bestimmten Bereich wird ein scharf abgebildeter Abstandsbereich gegenüber einem unscharfen Vordergrund oder einem unscharfen Hintergrund herausgestellt. Zur manuellen Fokussierung des Kameraobjektivs der Kamera kann eine sogenannte Schärfezieheinrichtung (englisch: Follow Focus) vorgesehen sein, mit welcher ein Entfernungseinstellring des Kameraobjektivs der Kamera betätigt wird damit der Fokus verändert wird.

Eine Kamera erzeugt ein Kamerabild, das Bildinformationen beinhaltet. Lassen sich anhand der Bildinformationen viele Details innerhalb der von der Kamera erfassten Szenerie unterscheiden, verfügt das Kamerabild über eine hohe Schärfe. Jedes Kameraobjektiv einer Kamera kann auf eine bestimmte Entfernung scharf gestellt werden. Dabei ist es möglich, eine Ebene in der erfassten Szenerie scharf abzubilden. Diese Ebene wird auch als Schärfeebene bezeichnet. Motivteile eines Aufnahmemotivs, welches sich außerhalb dieser Schärfeebene befinden, werden mit einem wachsenden Abstand zur Schärfeebene graduell unschärfer abgebildet. Die Schärfentiefe (englisch Depth of Field) bildet ein Maß für die Ausdehnung eines ausreichend scharfen Bereiches in einem Objektraum eines abbildenden optischen Systems. Unter der Schärfentiefe, welche auch umgangssprachlich als Tiefenschärfe bezeichnet wird, versteht man die Ausdehnung eines Bereiches, in dem das aufgenommene Kamerabild als ausreichend scharf empfunden wird.

Bei der manuellen Fokussierung des Kameraobjektivs zur Einstellung der Schärfenebene und der Schärfentiefe kann der Nutzer durch ein Assistenzsystem unterstützt werden. Hierbei können herkömmliche Methoden zur Schärfeindikation zum Einsatz kommen, welche neben der Anzeige der Kamerabildes z.B. in einem Sucher oder auf einem Monitor zusätzliche Informationen zur Verfügung stellen. Bei einem sogenannten Fokus-Peaking erfolgt eine Schärfeindikation durch eine kontrastbasierte Falschfarbendarstellung des erfassten Kamerabildes auf einem Bildschirm. Hierbei kann der Kontrast an Objektkanten des Aufnahmemotivs angehoben werden.

Bei herkömmlichen Kamera-Assistenzsystemen können auch Entfernungsinformationen in ein Kamerabild eingeblendet bzw. dem Kamerabild in einer eigenen Overlay-Ebene überlagert werden. Durch Einfärben von Pixel des Kamerabildes kann eine farbcodierte zweidimensionale Overlay-Ebene über das Kamerabild gelegt werden. Weiterhin ist es möglich, dass Kanten von scharf abgebildeten Objekten farbig markiert werden.

Darüber hinaus sind herkömmliche Fokussierungsassistenzsysteme bekannt, bei denen eine Häufigkeitsverteilung von Objekten innerhalb eines Blickfeldes einer Kamera angezeigt werden, um einen Nutzer bei der manuellen Fokussierung des Kameraobjektivs zu unterstützen.

Ein wesentlicher Nachteil derartiger herkömmlichen Kamera-Assistenzsysteme zur Unterstützung eines Nutzers bei der Fokussierung des Kameraobjektivs der Kamera besteht darin, dass entweder der Bildinhalt des Kamerabildes mit Informationen überlagert wird, sodass das eigentlich erfasste Kamerabild für den Nutzer nur eingeschränkt erkennbar ist, oder dass die angezeigten Informationen für den Nutzer nicht intuitiv nachvollziehbar sind. Hierdurch wird die manuelle Fokussierung des Kameraobjektivs der Kamera für den Nutzer mühsam und fehleranfällig.

Es ist daher eine Aufgabe der vorliegenden Erfindung, ein Kamera-Assistenzsystem zur Unterstützung eines Nutzers bei der Fokussierung einer Kamera zu schaffen, bei welcher die Fehleranfälligkeit bei der manuellen Fokussierung des Kameraobjektivs reduziert wird.

Diese Aufgabe wird durch ein Kamera-Assistenzsystem mit den in Patentanspruch 1 angegebenen Merkmalen gelöst.

Die Erfindung schafft demnach ein Kamera-Assistenzsystem mit einer Bildverarbeitungseinheit, welche ein von einer Kamera empfangenes Kamerabild eines Aufnahmemotivs zur Erzeugung eines Nutz-Kamerabildes verarbeitet, wobei das von der Kamera empfangene Kamerabild auf eine virtuelle dreidimensionale Projektionsfläche projiziert wird, deren Höhenwerte einer lokalen Abbildungsschärfe des empfangenen Kamerabildes entspricht und mit einer Anzeigeeinheit, welche das von der Bildverarbeitungseinheit auf die virtuelle dreidimensionale Projektionsfläche projizierte Kamerabild anzeigt.

Mithilfe des erfindungsgemäßen Kamera-Assistenzsystems kann die manuelle Fokussierung bzw. Scharfstellung eines Kameraobjektivs der Kamera schneller und mit höherer Präzision erfolgen.

Vorteilhafte Ausführungsformen des erfindungsgemäßen Kamera-Assistenzsystems ergeben sich aus den Unteransprüchen.

Bei einer möglichen Ausführungsform des erfindungsgemäßen Kamera-Assistenzsystems wird die lokale Abbildungsschärfe des empfangenen Kamerabildes durch eine Abbildungsschärfe-Detektionseinheit des Kamera-Assistenzsystems bestimmt.

Diese erlaubt es, das erfindungsgemäße Kamera-Assistenzsystem auch bei Systemen einzusetzen, die über keine Tiefenmesseinheit zur Erzeugung einer Tiefenkarte verfügen.

Bei einer möglichen Ausführungsform des erfindungsgemäßen Kamera-Assistenzsystems weist die Abbildungsschärfe-Detektionseinheit des Kamera-Assistenzsystems eine Kontrastdetektionseinheit oder eine Phasendetektionseinheit auf.

Bei einer möglichen Ausführungsform des erfindungsgemäßen Kamera-Assistenzsystems berechnet die Abbildungsschärfe-Detektionseinheit des Kamera-Assistenzsystems die lokale Abbildungsschärfe des empfangenen Kamerabildes in Abhängigkeit von mindestens einer Fokusmetrik.

Durch die mögliche Verwendung unterschiedlicher Fokusmetriken ist es möglich, das Kamera-Assistenzsystem für unterschiedliche Anwendungsfälle zu konfigurieren.

Bei einer möglichen Ausführungsform des erfindungsgemäßen Kamera-Assistenzsystems berechnet die Abbildungsschärfe-Detektionseinheit auf Basis von ermittelten lokalen Kontrastwerten des von der Kamera empfangenen unverarbeiteten Kamerabildes und/oder auf Basis von ermittelten lokalen Kontrastwerten des von der Bildverarbeitungseinheit daraus erzeugten verarbeiteten Nutz-Kamerabildes die Abbildungsschärfe des empfangenen Kamerabildes anhand einer kontrastwertbasierten Fokusmetrik.

Bei einer möglichen Ausführungsform des erfindungsgemäßen Kamera-Assistenzsystems ermittelt die Abbildungsschärfe-Detektionseinheit des Kamera-Assistenzsystems die lokalen Kontrastwerte des von der Kamera empfangenen zweidimensionalen Kamerabildes und/oder des daraus erzeugten zweidimensionalen Nutz-Kamerabildes jeweils für einzelne Pixel des jeweiligen Kamerabildes oder jeweils für eine Gruppe von Pixeln des jeweiligen Kamerabildes.

Bei einer weiteren möglichen Ausführungsform des erfindungsgemäßen Kamera-Assistenzsystems wird das von der Kamera empfangene Kamerabild von einem Ortsfrequenzfilter gefiltert.

Durch diese Filterung kann eine Reduzierung einer Fragmentierung des auf der Anzeigeeinheit angezeigten und auf die virtuelle Projektionsfläche projizierten Kamerabildes erreicht werden.

Bei einer weiteren möglichen Ausführungsform des erfindungsgemäßen Kamera-Assistenzsystems berechnet die Bildverarbeitungseinheit ein Stereobildpaar, welches auf einer 3D-Anzeigeeinheit des Kamera-Assistenzsystems angezeigt wird.

Das Stereobildpaar wird vorzugsweise auf Basis des auf die virtuelle dreidimensionale Projektionsfläche projizierten Kamerabildes durch die Bildverarbeitungseinheit des Kamera-Assistenzsystems berechnet.

Die dreidimensionale Darstellung mithilfe der 3D-Anzeigeeinheit erleichtert die intuitive Fokussierung des Kameraobjektivs der Kamera durch den Nutzer.

Bei einer alternativen Ausführungsform des erfindungsgemäßen Kamera-Assistenzsystems wird durch die Bildverarbeitungseinheit auf Basis des auf die virtuelle dreidimensionale Projektionsfläche projizierten Kamerabildes eine Pseudo-3D-Darstellung mit künstlich generierten Schatten oder eine Schrägansicht berechnet, welche auf einer 3D-Anzeigeeinheit des Kamera-Assistenzsystems angezeigt wird.

Bei dieser Ausführungsform wird ebenfalls die intuitive Bedienbarkeit bei der Fokussierung des Kameraobjektivs der Kamera erleichtert, ohne dass das Kamera-Assistenzsystem eine 3D-Anzeigeeinheit aufweisen muss.

Bei einer weiteren möglichen Ausführungsform des erfindungsgemäßen Kamera-Assistenzsystems entsprechen die Höhenwerte der von der Bildverarbeitungseinheit erzeugten virtuellen dreidimensionalen Projektionsfläche einem berechneten Produkt eines ermittelten lokalen Kontrastwertes des von der Kamera empfangenen unverarbeiteten Kamerabildes und eines einstellbaren Skalierungsfaktors.

Auf diese Weise besteht für den Nutzer die Möglichkeit, die virtuelle dreidimensionale Projektionsfläche für den jeweiligen Anwendungsfall in dessen Tiefe bzw. Höhe einzustellen bzw. zu justieren.

Bei einer weiteren möglichen Ausführungsform des erfindungsgemäßen Kamera-Assistenzsystems wird das von der Bildverarbeitungseinheit erzeugte Nutz-Kamerabild in einem Bildspeicher des Kamera-Assistenzsystems gespeichert.

Dies erleichtert eine Übertragung des Nutz-Kamerabildes und erlaubt eine weitere lokale Bildverarbeitung des erzeugten Nutz-Kamerabildes.

Bei einer weiteren möglichen Ausführungsform des erfindungsgemäßen Kamera-Assistenzsystems führt die Bildverarbeitungseinheit einen Erkennungsalgorithmus zur Erkennung signifikanter Objektteile des in dem empfangenen Kamerabild enthaltenen Aufnahmemotivs aus und fordert über eine Schnittstelle entsprechende Bildausschnitte innerhalb des Kamerabildes mit erhöhter Auflösung von der Kamera an.

Hierdurch ist eine manuelle Fokussierung des Kameraobjektivs der Kamera mit erhöhter Präzision möglich.

Bei einer weiteren möglichen Ausführungsform des erfindungsgemäßen Kamera-Assistenzsystems weist das Kamera-Assistenzsystem mindestens eine Tiefenmesseinheit auf, die eine Tiefenkarte bereitstellt, welche von der Bildverarbeitungseinheit zur Erzeugung der virtuellen dreidimensionalen Projektionsfläche verarbeitet wird.

Bei einer möglichen Ausführungsform des erfindungsgemäßen Kamera-Assistenzsystems ist die Tiefenmesseinheit des Kamera-Assistenzsystems geeignet, eine momentane Entfernung von Aufnahmeobjekten, insbesondere des Aufnahmemotivs, von der Kamera durch Messung einer Laufzeit oder durch Messung einer Phasenverschiebung von Ultraschallwellen oder von elektromagnetischen Wellen, zu messen und eine entsprechende Tiefenkarte zu generieren.

Bei einer möglichen Ausführungsform des erfindungsgemäßen Kamera-Assistenzsystems weist die Tiefenmesseinheit mindestens einen Sensor zur Erfassung von elektromagnetischen Wellen, insbesondere von Lichtwellen, und/oder einen Sensor zur Erfassung von Schallwellen, insbesondere von Ultraschallwellen, auf.

Bei einer möglichen Ausführungsform des erfindungsgemäßen Kamera-Assistenzsystems werden die von den Sensoren der Tiefenmesseinheit erzeugten Sensordaten von einem Prozessor der Tiefenmesseinheit zur Erzeugung der Tiefenkarte fusioniert.

Durch Fusionierung der Sensordaten ist es möglich, die Qualität und Genauigkeit der zur Projektion des Kamerabildes herangezogenen Tiefenkarte zu steigern.

Bei einer weiteren möglichen Ausführungsform des erfindungsgemäßen Kamera-Assistenzsystems weist die Tiefenmesseinheit des Kamera-Assistenzsystems mindestens einen optischen Kamerasensor zur Erzeugung eines oder mehrerer Tiefenbilder auf, die durch einen Prozessor der Tiefenmesseinheit zur Generierung der Tiefenkarte verarbeitet werden.

Bei einer möglichen Ausführungsform des erfindungsgemäßen Kamera-Assistenzsystems ist eine Stereo-Bildkamera vorgesehen, die optische Kamerasensoren zur Erzeugung von Stereo-Kamerabildpaaren aufweist, die durch den Prozessor der Tiefenmesseinheit zur Generierung der Tiefenkarte verarbeitet werden.

Bei einer weiteren möglichen Ausführungsform des erfindungsgemäßen Kamera-Assistenzsystems weist die Bildverarbeitungseinheit ein Tiefenkartenfilter zur mehrdimensionalen Filterung der von der Tiefenmesseinheit bereitgestellten Tiefenkarte auf.

Bei einer weiteren möglichen Ausführungsform des erfindungsgemäßen Kamera-Assistenzsystems weist das Kamera-Assistenzsystem eine Einstelleinheit zur Einstellung von Aufnahmeparametern der Kamera auf.

Bei einer möglichen Ausführungsform des erfindungsgemäßen Kamera-Assistenzsystems umfassen die durch die Einstelleinheit des Kamera-Assistenzsystems einstellbaren Aufnahmeparameter eine Fokuslage, eine Irisblendenöffnung und eine Brennweite eines Kameraobjektivs der Kamera sowie eine Bildaufnahmefrequenz und eine Verschlusszeit.

Bei einer weiteren möglichen Ausführungsform des erfindungsgemäßen Kamera-Assistenzsystems erhält die Bildverarbeitungseinheit über eine Schnittstelle, die durch die Einstelleinheit des Kamera-Assistenzsystems eingestellte Fokuslage und überlagert diese als semitransparente Schärfenebene dem auf die virtuelle dreidimensionale Projektionsfläche projizierten Kamerabild zu dessen Anzeige auf der Anzeigeeinheit des Kamera-Assistenzsystems.

Durch Änderung der Fokuseinstellung bzw. Fokuslage kann diese Schärfenebene durch den Nutzer mittels der Einstelleinheit in der Tiefe verschoben werden, wobei anhand der Überschneidungen mit dem in dem Kamerabild enthaltenen Aufnahmemotiv eine korrekte Schärfeneinstellung erfolgen kann.

Bei einer weiteren möglichen Ausführungsform des erfindungsgemäßen Kamera-Assistenzsystems ist ein Blickpunkt auf das auf die virtuelle dreidimensionale Projektionsfläche projizierte Kamerabild, welches auf der Anzeigeeinheit des Kamera-Assistenzsystems angezeigt wird, ebenfalls einstellbar.

Bei einer möglichen Ausführungsform des erfindungsgemäßen Kamera-Assistenzsystems schneidet die semitransparente Schärfenebene eine Schärfeskala, die an einem Rand der Anzeigeeinheit des Kamera-Assistenzsystems angezeigt wird.

Hierdurch wird die manuelle Fokussierung des Kameramotivs auf die Schärfenebene zusätzlich erleichtert.

Bei einer weiteren möglichen Ausführungsform des erfindungsgemäßen Kamera-Assistenzsystems ermittelt die Bildverarbeitungseinheit anhand einer eingestellten Irisblendenöffnung, einer eingestellten Fokuslage und ggf. einer eingestellten Brennweite des Kameraobjektivs der Kamera eine momentane Schärfentiefe.

Bei einer möglichen Ausführungsform des erfindungsgemäßen Kamera-Assistenzsystems überlagert die Bildverarbeitungseinheit dem auf die virtuelle dreidimensionale Projektionsfläche projizierten Kamerabild eine semitransparente Ebene zur Darstellung einer hinteren Grenze einer Schärfentiefe und eine weitere semitransparente Ebene zur Darstellung einer vorderen Grenze der Schärfentiefe zur Anzeige auf der Anzeigeeinheit des Kamera-Assistenzsystems.

Hierdurch wird die manuelle Fokussierung des Kameraobjektivs auf Motivteile des Aufnahmemotivs innerhalb der Schärfentiefe erleichtert.

Bei einer weiteren möglichen Ausführungsform des erfindungsgemäßen Kamera-Assistenzsystems führt die Bildverarbeitungseinheit des Kamera-Assistenzsystems anhand der von der Tiefenmesseinheit bereitgestellten Tiefenkarte und anhand des von der Kamera erhaltenen Kamerabildes eine Kalibrierung aus, die die Relativlage der Tiefenmesseinheit zu der Kamera berücksichtigt.

Hierdurch kann die Messgenauigkeit der Tiefenmesseinheit zur Erzeugung der Tiefenkarte und somit die Genauigkeit bei der manuellen Fokussierung erhöht werden.

Bei einer weiteren möglichen Ausführungsform des erfindungsgemäßen Kamera-Assistenzsystems ermittelt die Bildverarbeitungseinheit anhand der von der Tiefenmesseinheit im Zeitverlauf bereitgestellten Tiefenkarten einen Bewegungsvektor und eine zukünftige Position des Aufnahmemotivs innerhalb eines von der Kamera empfangenen Kamerabildes und leitet daraus eine Veränderung der lokalen Abbildungsschärfe des empfangenen Kamerabildes ab.

Durch diese Vorausberechnung ist es möglich, Verzögerungen, welche durch die Messung und Verarbeitung des Kamerabildes verursacht werden, zu kompensieren.

Die Erfindung schafft ferner eine Kamera mit einem Kamera-Assistenzsystem zur Unterstützung bei der Fokussierung der Kamera mit den im Patentanspruch 30 angegebenen Merkmalen.

Die Erfindung schafft demnach eine Kamera mit einem Kamera-Assistenzsystem zur Unterstützung bei der Fokussierung der Kamera,
wobei das Kamera-Assistenzsystem aufweist:

eine Bildverarbeitungseinheit, welche ein von der Kamera empfangenes Kamerabild eines Aufnahmemotivs zur Erzeugung eines Nutz-Kamerabildes verarbeitet, wobei das von der Kamera empfangene Kamerabild auf eine virtuelle dreidimensionale Projektionsfläche projiziert wird, deren Höhenwerte einer lokalen Abbildungsschärfe des empfangenen Kamerabildes entspricht, und
eine Anzeigeeinheit, welche das von der Bildverarbeitungseinheit auf die virtuelle dreidimensionale Projektionsfläche projizierte Kamerabild anzeigt.

Bei einer möglichen Ausführungsform der erfindungsgemäßen Kamera handelt es sich bei der Kamera um eine Bewegtbild-Kamera.

Bei einer alternativen Ausführungsform der erfindungsgemäßen Kamera handelt es sich bei der Kamera um eine Standbild-Kamera.

Die Erfindung schafft ferner ein Verfahren zur Unterstützung bei der Fokussierung einer Kamera mit den in Patentanspruch 32 angegebenen Merkmalen.

Die Erfindung schafft demnach ein Verfahren zur Unterstützung bei der Fokussierung einer Kamera mit den Schritten

Empfangen eines Kamerabildes eines Aufnahmemotivs durch eine Bildverarbeitungseinheit von der Kamera,

Projizieren des empfangenen Kamerabildes durch die Bildverarbeitungseinheit auf eine virtuelle dreidimensionale Projektionsfläche, deren Höhenwerte einer lokalen Abbildungsschärfe des empfangenen Kamerabildes entspricht, und

Anzeigen des auf der virtuellen dreidimensionalen Projektionsfläche projizierten Kamerabildes auf einer Anzeigeeinheit.

Bei einer möglichen Ausführungsform des erfindungsgemäßen Verfahrens wird die Abbildungsschärfe des empfangenen Kamerabildes in Anhängigkeit einer Fokusmetrik berechnet.

Bei einer möglichen Ausführungsform des erfindungsgemäßen Verfahrens wird die lokale Abbildungsschärfe auf Basis von ermittelten lokalen Kontrastwerten des von der Kamera empfangenen unverarbeiteten Kamerabildes und/oder auf Basis von ermittelten lokalen Kontrastwerten des von einer Bildverarbeitungseinheit daraus erzeugten verarbeiteten Nutz-Kamerabildes anhand einer kontrastwertbasierten Fokusmetrik berechnet und anschließend mit einem einstellbaren Skalierungsfaktor zur Berechnung der Höhenwerte der virtuellen dreidimensionalen Projektionsfläche multipliziert.

Bei einer alternativen Ausführungsform des erfindungsgemäßen Verfahrens wird die virtuelle dreidimensionale Projektionsfläche auf Basis einer Tiefenkarte erzeugt, die durch eine Tiefenmesseinheit bereitgestellt wird.

Im Weiteren werden mögliche Ausführungsformen des erfindungsgemäßen Kamera-Assistenzsystems und der erfindungsgemäßen Kamera sowie des erfindungsgemäßen Verfahrens zur Unterstützung bei der Fokussierung einer Kamera unter Bezugnahme auf die beigefügten Figuren näher erläutert.

Es zeigen:

Fig. 1          ein Blockschaltbild zur Darstellung einer möglichen Ausführungsform des erfindungsgemäßen Kamera-Assistenzsystems;

Fig. 2          ein Blockschaltbild zur Darstellung einer weiteren möglichen Ausführungsform des erfindungsgemäßen Kamera-Assistenzsystems;

Fig. 3          ein einfaches Blockschaltbild zur Darstellung einer möglichen Implementierung einer Tiefenmesseinheit des in Fig. 2 dargestellten Kamera-Assistenzsystems;

Fig. 4          ein Ablaufdiagramm zur Darstellung einer möglichen Ausführungsform des erfindungsgemäßen Verfahrens zur Unterstützung bei der Fokussierung einer Kamera;

Fig. 5          ein weiteres Ablaufdiagramm zur Darstellung einer Ausführungsform des in Fig. 4 dargestellten Verfahrens zur Unterstützung bei der Fokussierung einer Kamera;

Fig. 6          ein Diagramm zur Erläuterung der Funktionsweise einer möglichen Ausführungsform des erfindungsgemäßen Kamera-Assistenzsystems;

Figuren 7A, 7B          Beispiele zur Erläuterung einer Anzeige einer Schärfenebene einer möglichen Ausführungsform des erfindungsgemäßen Kamera-Assistenzsystems;

Figuren 8A, 8B    eine Anzeige einer Schärfentiefe einer möglichen Ausführungsform des erfindungsgemäßen Kamera-Assistenzsystems.

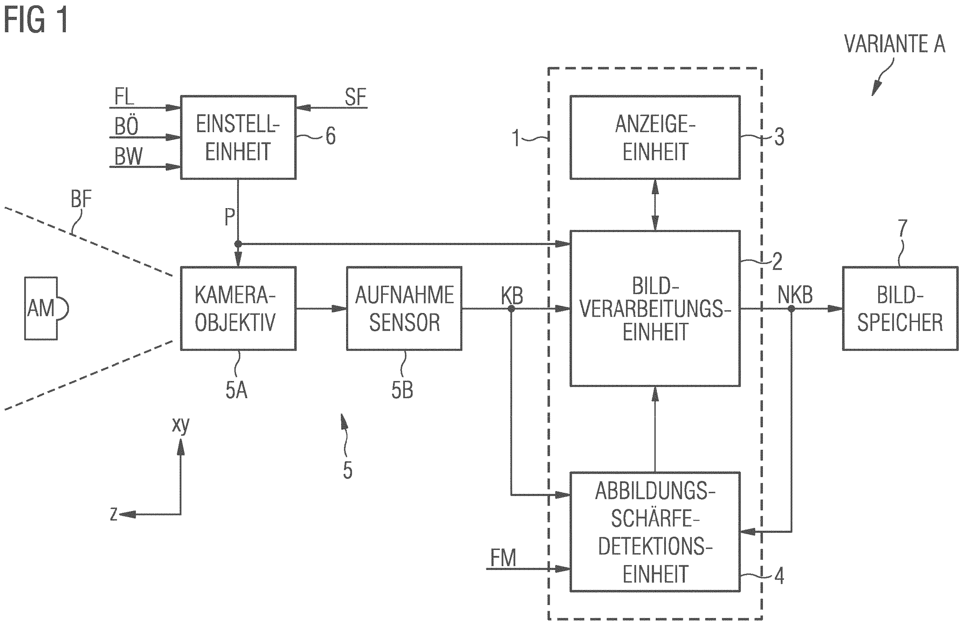

Fig. 1 zeigt ein Blockschaltbild zur Erläuterung einer möglichen Ausführungsform eines erfindungsgemäßen Kamera-Assistenzsystems 1. Das in Fig. 1 dargestellte Kamera-Assistenzsystem 1 kann in einer Kamera 5 integriert sein oder eine separate Einheit innerhalb des Kamera-Systems bilden. Bei dem in Fig. 1 dargestellten Ausführungsbeispiel weist das Kamera-Assistenzsystem 1 eine Bildverarbeitungseinheit 2 und eine Anzeigeeinheit 3 auf. Die Bildverarbeitungseinheit 2 des Kamera-Assistenzsystems 1 kann Teil einer Bildverarbeitungseinheit einer Kamera oder eines Kamera-Systems sein. Alternativ kann das Kamera-Assistenzsystem 1 eine eigene Bildverarbeitungseinheit 2 aufweisen.

Die Bildverarbeitungseinheit 2 des Kamera-Assistenzsystems 1 erhält ein Kamerabild KB, wie in Fig. 1 dargestellt. Die Bildverarbeitungseinheit 2 erzeugt aus dem empfangenen Kamerabild KB ein Nutz-Kamerabild NKB, welches in einem Bildspeicher 7 abgespeichert werden kann. Die Bildverarbeitungseinheit 2 erhält das unverarbeitete Kamerabild KB von einer Kamera 5. Bei dieser Kamera 5 kann es sich um eine Bewegtbild-Kamera oder eine Festbild-Kamera handeln. Das erfindungsgemäße Kamera-Assistenzsystem 1 eignet sich insbesondere zur Unterstützung bei der Fokussierung eines Kameraobjektives einer Bewegtbild-Kameras. Die Bildbearbeitungseinheit 2 des Kamera-Assistenzsystems 1 projiziert das von der Kamera 5 empfangene Kamerabild KB auf eine virtuelle dreidimensionale Projektionsfläche PF, deren Höhenwerte einer lokalen Abbildungsschärfe AS des von der Kamera 5 empfangenen Kamerabildes KB entspricht. Das Kamera-Assistenzsystem 1 weist ferner eine Anzeigeeinheit 3 auf, welche das von der Bildverarbeitungseinheit 2 des Kamera-Assistenzsystems 1 auf die virtuelle dreidimensionale Projektionsfläche PF projizierte Kamerabild KB einem Nutzer anzeigt.

Die virtuelle Projektionsfläche PF ist ein durch Rechenoperationen erzeugter Datensatz. Die virtuelle Projektionsfläche PF ist dreidimensional und nicht zweidimensional, d.h. die zur Projektion des Kamerabildes KB verwendete virtuelle Projektionsfläche PF ist gekrümmt, wobei ihre z-Werte bzw. Höhenwerte vergleichbar einer kartographischen Darstellung eines Gebirges einer lokalen Abbildungsschärfe des von der Kamera erzeugten Kamerabildes KB entspricht. Die virtuelle Projektionsfläche bildet eine 3D-Reliefkarte, die topografische Begebenheiten bzw. die dreidimensionale Gestalt der im Kamerabild KB dargestellten Umgebung, insbesondere des Aufnahmemotivs AM wiedergibt. Die Erhöhungen innerhalb der virtuellen 3D-Projektionsfläche PF können mit einem Skalierungsfaktor SF überhöht werden, um das Verhältnis verschiedener Gipfel und Täler innerhalb der virtuellen 3D-Projektionsfläche PF für den Bertachter deutlicher herauszustellen. Die virtuelle 3D-Projektionsfläche PF besteht aus Flächenpunkten pf mit drei Koordinaten pf (x,y,z), wobei die x-Koordinaten und die y-Koordinaten der Flächenpunkte pf der virtuellen 3D-Projektionsfläche PF den x-Koordinaten und y-Koordinaten der Pixel p des von der Kamera 5 erzeugten Kamerabildes KB entsprechen und die z-Koordinaten bzw. Höhenwerte der Flächenpunkte pf der virtuellen 3D-Projektionsfläche der ermittelten lokalen Abbildungsschärfe AS des Kamerabildes KB an dieser Stelle bzw. in diesem lokalen Bereich des Kamerabildes KB entsprechen : ( pf (x, y, AS)).Der lokale Bereich innerhalb des Kamerabildes KB kann durch eine Gruppe von quadratisch angeordneten Pixeln p innerhalb des Kamerabildes KB gebildet sein, beispielsweise 3 x 3 = 9 Pixel oder 5 x 5 Pixel= 25 Pixel.

Die Berechnung der Flächenpunkte pf der virtuellen Projektionsfläche PF kann unter Einsatz relativ geringer Rechenressourcen der Bildverarbeitungseinheit 2 in Echtzeit erfolgen, da hierfür keine mathematisch aufwendigen Rechenoperationen, wie beispielsweise Merkmalserkennung, Translation oder Rotation ausgeführt werden müssen.

Wie in Fig. 1 dargestellt, umfasst die Kamera 5 im Wesentlichen ein Kameraobjektiv 5A und einen Aufnahmesensor 5B. Das Kameraobjektiv 5A erfasst ein Aufnahmemotiv AM, welches sich im Blickfeld BF des Kameraobjektivs 5A befindet. Verschiedene Aufnahmeparameter P können durch eine Einstelleinheit 6 des Kamera-Assistenzsystems 1 eingestellt werden. Diese Aufnahmeparameter P können bei einer möglichen Ausführungsform auch der Bildverarbeitungseinheit 2 des Kamera-Assistenzsystems 1 zugeführt werden, wie in Fig. 1 schematisch dargestellt.

Bei der in Fig. 1 dargestellten Ausführungsform erhält die Bildverarbeitungseinheit 2 die lokale Abbildungsschärfe AS des Kamerabildes KB durch eine Abbildungsschärfe-Detektionseinheit 4 des Kamera-Assistenzsystems 1. Die Abbildungsschärfe-Detektionseinheit 4 des Kamera-Assistenzsystems 1 weist bei einer möglichen Ausführungsform eine Kontrastdetektionseinheit zur Ermittlung von Bildkontrasten auf. Bei einer alternativen Ausführungsform kann die Abbildungsschärfe-Detektionseinheit 4 auch eine Phasendetektionseinheit aufweisen.

Bei einer möglichen Ausführungsform des in Fig. 1 dargestellten Kamera-Assistenzsystems 1 berechnet die Abbildungsschärfe-Detektionseinheit 4 die lokale Abbildungsschärfe AS des empfangenen Kamerabildes KB in Abhängigkeit von mindestens einer Fokusmetrik FM. Dabei kann die Abbildungsschärfe-Detektionseinheit 4 auf Basis von ermittelten lokalen Kontrastwerten des von der Kamera 5 empfangenen unverarbeiteten Kamerabildes KB und/oder auf Basis von ermittelten lokalen Kontrastwerten des von der Bildverarbeitungseinheit 2 daraus erzeugten verarbeiteten Nutz-Kamerabildes NKB die lokale Abbildungsschärfe AS des empfangenen Kamerabildes KB anhand einer kontrastwertbasierten Fokusmetrik FM berechnen.

Bei einer möglichen Ausführungsform ermittelt somit die Abbildungsschärfe-Detektionseinheit 4 die lokale Abbildungsschärfe AS des empfangenen Kamerabildes KB durch Verarbeitung des unverarbeiteten Kamerabildes KB selbst und durch Verarbeitung des daraus erzeugten Nutz-Kamerabildes NKB, welches in dem Bildspeicher 7 abgespeichert wird. Alternativ kann die Abbildungsschärfe-Detektionseinheit 4 die lokale Abbildungsschärfe AS allein auf Grundlage des unverarbeiteten Kamerabildes KB, welches die Abbildungsschärfe-Detektionseinheit 4 von der Kamera 5 erhält, anhand der vordefinierten kontrastwertbasierten Fokusmetrik FM berechnen. Die Abbildungsschärfe-Detektionseinheit 4 des Kamera-Assistenzsystems 1 ermittelt bei einer möglichen Ausführungsform die lokalen Kontrastwerte des von der Kamera 5 empfangenen zweidimensionalen Kamerabildes KB und/oder des daraus erzeugten zweidimensionalen Nutz-Kamerabildes NKB jeweils für einzelne Pixel des jeweiligen Kamerabildes KB/NKB. Alternativ kann die Abbildungsschärfe-Detektionseinheit 4 die lokalen Kontrastwerte des von der Kamera 5 empfangenen zweidimensionalen Kamerabildes KB und des daraus erzeugten zweidimensionalen Nutz-Kamerabildes NKB jeweils für eine Gruppe von Pixeln des Kamerabildes KB bzw. Nutz-Kamerabildes NKB ermitteln. Die Ermittlung der lokalen Kontrastwerte des Kamerabildes KB kann somit Pixel für Pixel oder für vorgegebene Pixelgruppen erfolgen.

Der Aufnahmesensor 5B der Kamera 5 kann bei einer möglichen Ausführungsform durch einen CCD- oder CMOS-Bildwandler gebildet werden, dessen Signalausgang mit dem Signaleingang der Bildverarbeitungseinheit 2 des Kamera-Assistenzsystems 1 verbunden ist.

Bei einer möglichen Ausführungsform des erfindungsgemäßen Kamera-Assistenzsystems 1 kann das von der Kamera 5 empfangene digitale Kamerabild KB von einem Ortsfrequenzfilter gefiltert werden. Hierdurch kann eine Reduzierung einer Fragmentierung des auf der Anzeigeeinheit 3 angezeigten und auf die virtuelle Projektionsfläche PF projizierten Kamerabildes KB erreicht werden. Bei dem Ortsfrequenzfilter handelt es sich vorzugsweise um ein Tiefpassfilter. Damit keine zu starke Fragmentierung erfolgt, besteht die Möglichkeit einer zweidimensionalen, einstellbaren Filterung, damit die virtuelle Projektionsfläche harmonischer ausgeformt wird. Das auf der Anzeigeeinheit 3 angezeigte Bild erhält somit im Bereich der Schärfentiefe ST eine dreidimensionale Struktur. Um die Kontrasterkennung zu optimieren, kann das Kamera-Assistenzsystem 1 zusätzlich zu dem prozessierten Nutz-Kamerabild NKB auch ein Bild mit hohem Dynamikumfang berücksichtigen, um Quantisierungs- und Begrenzungseffekte zu vermindern. Derartige Quantisierungs- und Begrenzungseffekte führen in dunklen und hellen Bereichen zur Reduktion der Bildqualität des erzeugten Nutz-Kamerabildes NKB. Das Bild mit hohem Kontrastumfang kann zusätzlich zu dem prozessierten Nutz-Kamerabild NKB als Kamerabild KB der Abbildungsschärfe-Detektionseinheit 4 bereitgestellt werden. Die Bildverarbeitungseinheit 2 kann sodann neben einem Bild mit hohem Dynamikumfang auch ein in den entsprechenden Farbraum konvertiertes Nutzkamerabild NKB mit gewünschtem Dynamikbereich erzeugen. Die dafür notwendigen Informationen (LUT, Farbraum) kann die Bildverarbeitungseinheit 2 über eine Datenkommunikationsschnittstelle von der Kamera 5 beziehen. Alternativ diese Informationen an dem Gerät von einem Nutzer eingestellt werden.

Das Kamera-Assistenzsystem 1 verfügt über eine Anzeigeeinheit 3, wie in Fig. 1 dargestellt. Bei einer möglichen Ausführungsform ist die Anzeigeeinheit 3 eine 3D-Anzeigeeinheit, die beispielsweise durch ein Stereodisplay mit entsprechender 3D-Brille (Polfilter, Shutter oder Anaglyph) oder durch ein autostereoskopisches Display gebildet ist. Die Bildverarbeitungseinheit 2 kann auf Basis des auf die virtuelle dreidimensionale Projektionsfläche PF projizierten Kamerabildes KB bei einer möglichen Ausführungsform ein Stereobildpaar berechnen, welches einem Nutzer auf der 3D-Anzeigeeinheit 3 des Kamera-Assistenzsystems 1 angezeigt wird.

Sofern keine 3D-Anzeigeeinheit 3 zur Verfügung steht, kann die Bildverarbeitungseinheit 2 bei einer möglichen Ausführungsform auf Basis des auf die virtuelle dreidimensionale Projektionsfläche PF projizierten Kamerabildes KB eine Pseudo-3D-Darstellung mit künstlich generierten Schatten berechnen, welche auf einer 2D-Anzeigeeinheit 3 des Kamera-Assistenzsystems 1 angezeigt wird. Alternativ kann auch eine Schrägansicht durch die Bildverarbeitungseinheit 2 berechnet werden, welche auf einer 2D-Anzeigeeinheit 3 des Kamera-Assistenzsystems 1 angezeigt wird. Die Schrägansicht auf ein im Raum liegendes Aufnahmemotiv AM innerhalb eines Kamerabildes KB ermöglicht es dem Nutzer Erhebungen leichter zu erkennen.

Bei einer möglichen Ausführungsform des erfindungsgemäßen Kamera-Assistenzsystems 1 ist die Anzeigeeinheit 3 für verschiedene Anwendungszwecke austauschbar. Die Anzeigeeinheit 3 ist über eine einfache oder bidirektionale Schnittstelle mit der Bildverarbeitungseinheit 2 verbunden. Bei einer weiteren möglichen Implementierung verfügt das Kamera-Assistenzsystem 1 über mehrere unterschiedliche austauschbare Anzeigeeinheiten 3 für verschiedene Anwendungszwecke. Die Anzeigeeinheit 3 kann bei einer möglichen Ausführungsform ein Touchscreen für Nutzereingaben aufweisen.

Bei einer möglichen Ausführungsform des erfindungsgemäßen Kamera-Assistenzsystems 1 ist die Anzeigeeinheit 3 über eine drahtgebundene Schnittstelle mit der Bildverarbeitungseinheit 2 verbunden. Bei einer alternativen Ausführungsform kann die Anzeigeeinheit 3 des Kamera-Assistenzsystems 1 auch über eine drahtlose Schnittstelle mit der Bildverarbeitungseinheit 2 verbunden sein. Weiterhin kann die Anzeigeeinheit 3 des Kamera-Assistenzsystems 1 bei einer möglichen Ausführungsform mit der Einstelleinheit 6 zur Einstellung der Aufnahmeparameter P in einem tragbaren Gerät integriert sein. Dies erlaubt eine freie Bewegung des Nutzers, beispielsweise des Kameraassistenten, während der Fokussierung des Kameraobjektivs 5A der Kamera 5. Mit Hilfe der Einstelleinheit 6 hat der Nutzer die Möglichkeit, verschiedene Aufnahmeparameter P einzustellen. Mit der Einstelleinheit 6 kann der Nutzer eine Fokuslage FL, eine Irisblendenöffnung BÖ einer Blende des Kameraobjektivs 5A und eine Brennweite BW des Kameraobjektivs 5A der Kamera 5 einstellen. Weiterhin können die Aufnahmeparameter P, welche mithilfe der Einstelleinheit 6 durch einen Nutzer eingestellt werden, eine Bildaufnahmefrequenz und eine Verschlusszeit umfassen. Die Aufnahmeparameter P werden vorzugsweise auch der Bildverarbeitungseinheit 2 zugeführt, wie in Fig. 1 schematisch dargestellt.

Bei einer möglichen Ausführungsform handelt es sich bei dem Kameraobjektiv 5A um ein austauschbares Kameraobjektiv bzw. ein Wechselobjektiv. Das Kameraobjektiv 5A kann bei einer möglichen Implementierung mithilfe von Objektivringen eingestellt werden. Dabei kann für die Fokuslage FL, die Irisblendenöffnung BÖ und für die Brennweite BW jeweils ein zugehöriger Objektivring vorgesehen sein. Jeder für einen Aufnahmeparameter P vorgesehene Objektivring des Kameraobjektivs 5A der Kamera 5 kann bei einer möglichen Implementierung durch einen zugehörigen Objektiv-Stellmotor eingestellt werden, der von der Einstelleinheit 6 ein Steuersignal erhält. Die Einstelleinheit 6 ist über eine Steuer-Schnittstelle mit den Objektiv-Stellmotoren des Kameraobjektivs 5A verbunden. Bei dieser Steuer-Schnittstelle kann es sich um eine drahtgebundene Schnittstelle oder um eine drahtlose Schnittstelle handeln. Die Objektiv-Stellmotore können auch im Gehäuse des Kameraobjektivs 5A integriert sein. Ein solches Kameraobjektiv 5A kann dann auch ausschließlich über die Steuer-Schnittstelle verstellt werden. In einer solchen Implementierung sind Objektivringe zur Verstellung nicht erforderlich.

Die Schärfentiefe ST hängt von verschiedenen Aufnahmeparametern P ab. Die Schärfentiefe ST wird durch den Aufnahmeabstand a, d.h. der Abstand zwischen dem Kameraobjektiv 5A und dem Aufnahmemotiv AM, beeinflusst. Die Schärfentiefe ST ist umso größer, je weiter das Aufnahmemotiv AM bzw. das Kameraobjekt entfernt ist. Weiterhin wird die Schärfentiefe ST von der Brennweite BW der Kameraoptik beeinflusst. Die Schärfentiefe ST ist umso größer, je kleiner die Brennweite BW der Kameraoptik der Kamera 5 ist. Bei gleichem Aufnahmeabstand hat eine große Brennweite BW eine geringe Schärfentiefe ST und eine kleine Brennweite BW hat eine hohe Schärfentiefe ST. Weiterhin hängt die Schärfentiefe ST von der Blendenöffnung BÖ der Blende des Kameraobjektivs 5A ab. Die Blende regelt, wie weit die Apertur des Kameraobjektivs 5A der Kamera 5 geöffnet wird. Je weiter die Apertur des Kameraobjektivs 5A geöffnet wird, umso mehr Licht fällt auf den Aufnahmesensor 5B der Kamera 5. Der Aufnahmesensor 5B der Kamera 5 benötigt eine bestimmte Lichtmenge, um alle Bereiche der im Blickfeld BF der Kamera 5 befindlichen Szenerie kontrastreich darzustellen. Je größer die gewählte Blendenöffnung BÖ der Blende ist (d.h. kleine Blendenzahl k), desto mehr Licht fällt auf den Aufnahmesensor 5B der Kamera 5. Umgekehrt gelangt weniger Licht auf den Aufnahmesensor 5B, wenn die Blendenöffnung BÖ der Blende des Kameraobjektivs 5A geschlossen wird. Eine kleine Blendenöffnung BÖ (d.h. hohe Blendenzahl k) führt zu einer hohen Schärfentiefe ST. Ein weiterer Einflussfaktor auf die Schärfentiefe ST ist die Sensorgröße des Aufnahmesensors 5B. Die Schärfentiefe ST hängt somit von verschiedenen Aufnahmeparametern P ab, die zum größten Teil durch die Einstelleinheit 6 einstellbar sind. Die Schärfentiefe ST wird durch die Wahl der Brennweite BW, die Entfernungseinstellung bzw. Fokuslage FL und durch die Blendenöffnung BÖ beeinflusst. Je größer die Blendenöffnung BÖ (kleine Blendenzahl k), umso geringer ist die Schärfentiefe ST (und umgekehrt). Bei einer Entfernungseinstellung (Fokussierung) auf ein nahes Objekt bzw. nahes Aufnahmemotiv AM ist der optisch als scharf erfasste Objektraum kürzer als bei einer Fokussierung auf ein weiter entferntes Objekt.

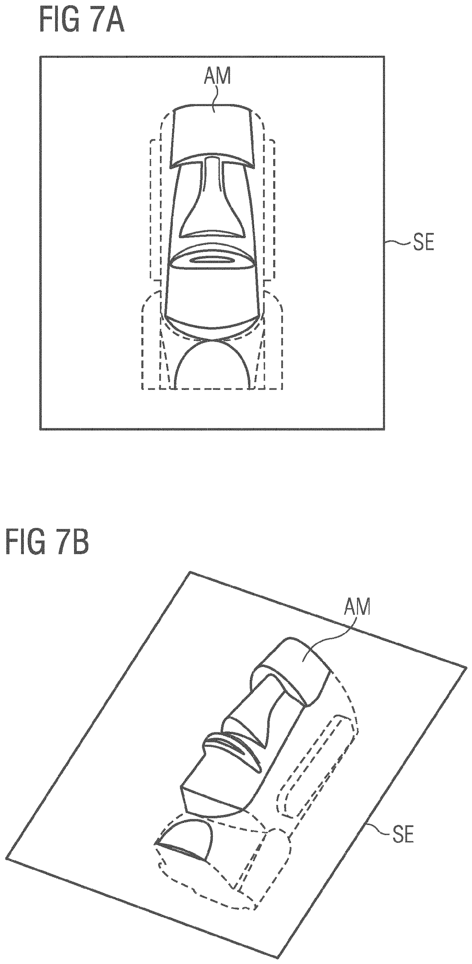

Bei einer möglichen Ausführungsform erhält die Bildverarbeitungseinheit 2 über eine weitere Steuer-Schnittstelle die durch die Einstelleinheit 6 des Kamera-Assistenzsystems 1 eingestellte Fokuslage FL und überlagert diese als semitransparente Schärfenebene SE dem auf die virtuelle dreidimensionale Projektionsfläche PF projizierten Kamerabild KB zur Anzeige auf der Anzeigeeinheit 3 des Kamera-Assistenzsystems 1. Die dargestellte semitransparente Schärfenebene SE schneidet bei einer möglichen Ausführungsform eine Schärfeskala, die an einem Rand der Anzeigeeinheit 3 des Kamera-Assistenzsystems 1 angezeigt wird. Die Darstellung einer semitransparenten Schärfenebene SE auf der Anzeigeeinheit 3 wird in Bezug auf die Figuren 7A, 7B näher beschrieben.

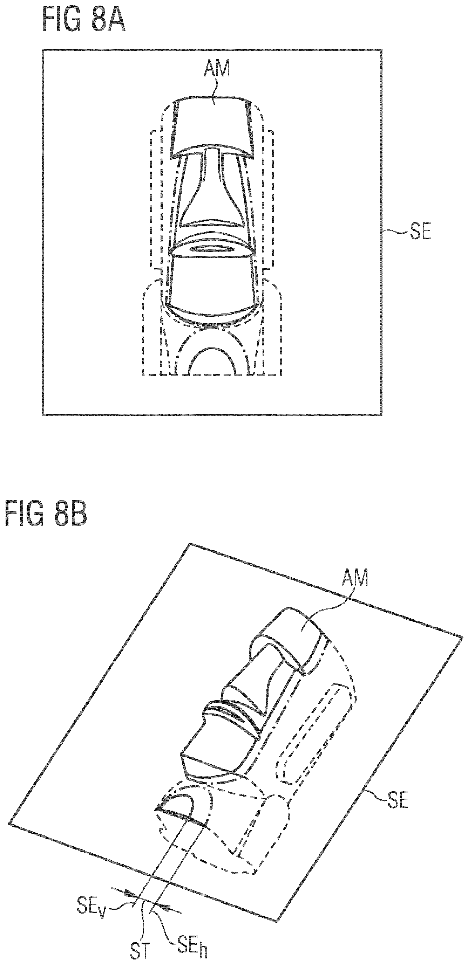

Bei einer weiteren möglichen Ausführungsform des erfindungsgemäßen Kamera-Assistenzsystems 1 kann die Bildverarbeitungseinheit 2 anhand der eingestellten Irisblendenöffnung BÖ , der eingestellten Fokuslage FL und ggf. der eingestellten Brennweite BW des Kameraobjektivs 5A der Kamera 5 auch eine momentane Schärfentiefe ST (englisch Depth of Field DoF) ermitteln. Die Schärfentiefe ST gibt den Entfernungsbereich an, bei dem das Bild scharf abgebildet wird. Objekte bzw. Objektteile, die sich vor oder hinter der Schärfenebene SE befinden, werden unscharf abgebildet. Je weiter sich die Objekte bzw. Objektteile entfernt von der Schärfenebene SE befinden, desto unschärfer werden diese Bereiche dargestellt. Innerhalb eines gewissen Bereiches ist diese Unschärfe allerdings derart schwach, dass sie ein Betrachter des Kamerabildes KB nicht wahrnehmen kann. Die nächsten und entferntesten Punkte, die noch innerhalb dieses zulässigen Bereiches liegen, bilden die Grenze der Schärfentiefe ST. Bei einer möglichen Ausführungsform überlagert die Bildverarbeitungseinheit 2 dem auf die virtuelle dreidimensionale Projektionsfläche PF projizierten Kamerabild KB eine semitransparente Ebene zur Darstellung der hinteren Grenze der Schärfentiefe ST und eine weitere semitransparente Ebene zur Darstellung einer vorderen Grenze der Schärfentiefe ST zur Anzeige auf der Anzeigeeinheit 3 des Kamera-Assistenzsystems 1, wie auch in den Figuren 8A, 8B dargestellt.

Bei einer möglichen Ausführungsform des erfindungsgemäßen Kamera-Assistenzsystems 1 erhält die Bildverarbeitungseinheit 2 über eine Schnittstelle einen Typ des verwendeten Kameraobjektivs 5A der Kamera 5 übermittelt. Aus einer zugehörigen gespeicherten Schärfentiefentabelle des Kameraobjektivtyps des Kameraobjektivs 5A kann die Bildverarbeitungseinheit 2 anhand der eingestellten Irisblendenöffnung BÖ, der eingestellten Fokuslage FL und ggf. der eingestellten Brennweite BW des Kameraobjektivs 5A die momentane Schärfentiefe ST ermitteln. Alternativ kann auch ein Nutzer über eine Nutzerschnittstelle, insbesondere die Einstelleinheit 6, einen Typ des momentan verwendeten Kameraobjektivs 5A eingeben.

Bei einer weiteren möglichen Ausführungsform des erfindungsgemäßen Kamera-Assistenzsystems 1 kann die Bildverarbeitungseinheit 2 einen Erkennungsalgorithmus zur Erkennung signifikanter Objektteile des in dem empfangenen Kamerabild KB enthaltenen Aufnahmemotivs AM ausführen und über eine Schnittstelle entsprechende Bildausschnitte innerhalb des Kamerabildes KB mit erhöhter Auflösung von der Kamera 5 anfordern. Hierdurch kann die Datenmenge bei der Bildübertragung gering gehalten werden. Weiterhin bietet sich die Anforderung von Bildausschnitten bei Anwendungsfällen an, bei denen die Sensorauflösung des Aufnahmesensors 5B der Kamera 5 die Monitorauflösung der Anzeigeeinheit 3 übersteigt. In diesem Fall kann die Bildverarbeitungseinheit 2 Bildausschnitte, in denen signifikante Objektteile oder Objekte (beispielsweise Gesichter, Augen usw.) enthalten sind, pixelweise als Bildausschnitte zusätzlich zum gesamten Kamerabild KB, welches meist eine reduzierte Auflösung aufweist, von der Kamera 5 anfordern. Dies kann bei einer möglichen Ausführungsform über eine bidirektionale Schnittstelle, insbesondere eine standardisierte Netzwerkschnittstelle erfolgen.

Bei einer möglichen Ausführungsform des erfindungsgemäßen Kamera-Assistenzsystems 1 berechnet die Abbildungsschärfe-Detektionseinheit 4 die lokale Abbildungsschärfe AS des empfangenen Kamerabildes KB in Abhängigkeit von mindestens einer vordefinierten Fokusmetrik FM. Diese Fokusmetrik FM kann bei einer möglichen Ausführungsform in einem Konfigurationsspeicher des Kamera-Assistenzsystems 1 hinterlegt sein.

Das von dem Aufnahmesensor 5B der Kamera 5 erzeugte Kamerabild KB kann eine Bildgröße von M x N Pixeln p umfassen. Jedes Pixel p kann zur Erfassung von Farbinformationen mit einem zugehörigen Farbfilter versehen sein, so dass ein einzelnes Pixel p nur jeweils Licht mit einem hauptsächlichen spektralen Anteil empfängt z.B. rot, grün, oder blau. Die örtliche Verteilung der jeweiligen Farbfilter auf die einzelnen Pixel p entspricht nach einem regelmäßigen und bekannten Muster. Durch Kenntnis der Filtereigenschaften sowie deren Anordnung ist es möglich, für jedes Pixel p (x, y) des zweidimensionalen Kamerabildes KB, neben dem detektierten Wert, der der Farbe des Farbfilters entspricht auch die Werte, die den anderen Farben entsprechen, zu berechnen, und zwar durch Interpolation der Werte aus benachbarten Pixeln. Ebenso kann für jeder Pixel p (x, y) des zweidimensionalen Kamerabildes KB ein Lumineszenzoder Graustufenwert ermittelt werden. Die Pixel p des Kamerabildes KB besitzen jeweils eine Position innerhalb der zweidimensionalen Matrix, nämlich eine Horizontalkoordinate x und eine Vertikalkoordinate y. Die lokale Abbildungsschärfe AS einer Gruppe von Pixeln p innerhalb des Kamerabildes KB kann durch die Abbildungsschärfe-Detektionseinheit 4 entsprechend einer vordefinierten Fokusmetrik FM in Echtzeit auf Grundlage von Ableitungen, auf Grundlage von statistischen Werten, auf Grundlage von Korrelationswerten und/oder mittels Datenkompression in Abhängigkeit der Graustufenwerte der Gruppe von Pixeln p innerhalb des Kamerabildes KB berechnet werden.

Beispielsweise kann ein Abbildungsschärfewert AS gemäß einer möglichen Fokusmetrik FM durch Aufsummierung der Quadrate von horizontalen ersten Ableitungswerten der Graustufenwerte f(x, y) der Pixel p (x,y) des Kamerabildes KB wie folgt berechnet werden:

$$\sum_{x=0}^{M-1}\sum_{y=0}^{N-3}(f(x,y+2)-f(x,y))^2$$

Alternativ kann auch ein Gradient der ersten Ableitungswerte der Graustufenwerte in Vertikalrichtung zur Ermittlung des lokalen Abbildungsschärfewertes AS der Pixelgruppe entsprechend einer entsprechend definierten Fokusmetrik FM berechnet werden. Weiterhin können die Quadratwerte der Gradienten der Graustufenwerte in Horizontalrichtung und/oder in Vertikalrichtung zur Berechnung der lokalen Abbildungsschärfe AS herangezogen werden.

Neben ersten und zweiten Ableitungen kann die Abbildungsschärfe-Detektionseinheit 4 auch Fokusmetriken FM verwenden, die auf statistischen Bezugsgrößen beruhen, beispielsweise auf einer Verteilung der Graustufenwerte innerhalb des Kamerabildes KB. Weiterhin ist es möglich, Fokusmetriken FM zu verwenden, die histogrammbasiert sind, beispielsweise ein Bereichshistogramm oder ein Entropiehistogramm. Darüber hinaus kann die lokale Abbildungsschärfe AS durch die Abbildungsschärfe-Detektionseinheit 4 auch mithilfe von Korrelationsverfahren berechnet werden, insbesondere Autokorrelation. Bei einer weiteren möglichen Ausführungsform kann die Abbildungsschärfe-Detektionseinheit 4 auch Datenkompressionsverfahren zur Berechnung der lokalen Abbildungsschärfe AS ausführen. Verschiedene Fokusmetriken FM können zudem zur Berechnung der lokalen Abbildungsschärfe AS durch die Abbildungsschärfe-Detektionseinheit 4 miteinander kombiniert werden.

Bei einer möglichen Ausführungsform des erfindungsgemäßen Kamera-Assistenzsystems 1 hat der Nutzer zudem die Möglichkeit die zu verwendende Fokusmetrik FM aus einer Gruppe vordefinierter Fokusmetriken FM je nach Anwendungsfall auszuwählen. Die ausgewählte Fokusmetrik FM kann bei einer möglichen Ausführungsform auf der Anzeigeeinheit 3 des Kamera-Assistenzsystems 1 dem Nutzer angezeigt werden. Verschiedene Fokus-Metriken FM eignen sich für verschiedene Anwendungsfälle. Bei einer weiteren Ausführungsform besteht zudem die Möglichkeit die zu verwendende Fokusmetrik über einen Editor mittels der Nutzerschnittstelle des Kamera-Assistenzsystems 1 für den gewünschten Anwendungsfall, insbesondere zu Testzwecken, selbst zu definieren.

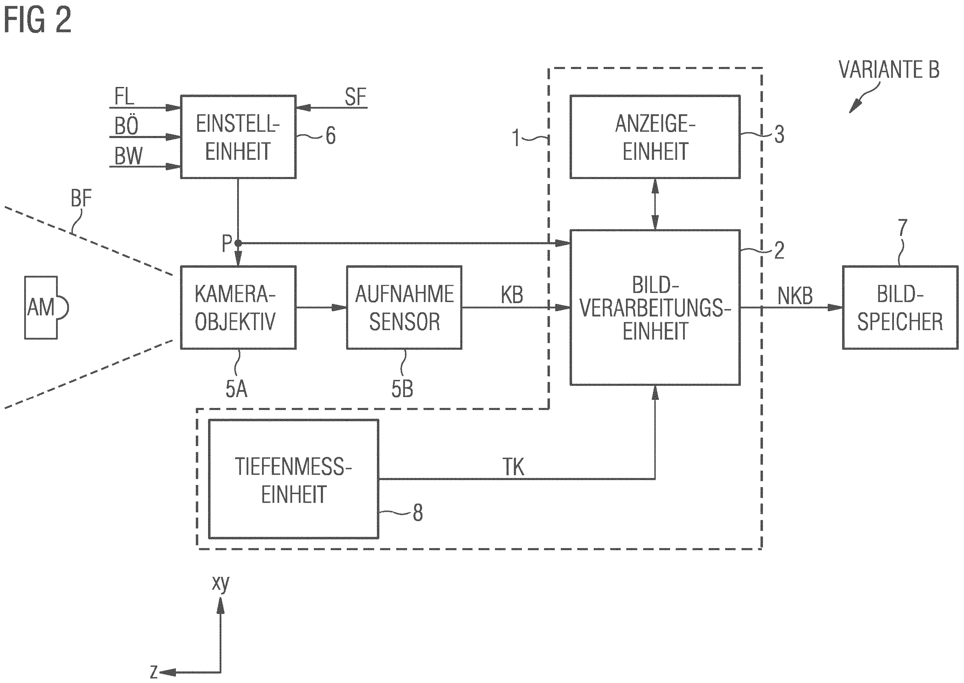

Fig. 2 zeigt ein Blockschaltbild zur Erläuterung einer weiteren möglichen Ausführungsform eines erfindungsgemäßen Kamera-Assistenzsystems 1. Entsprechende Einheiten sind mit entsprechenden Bezugszeichen versehen.

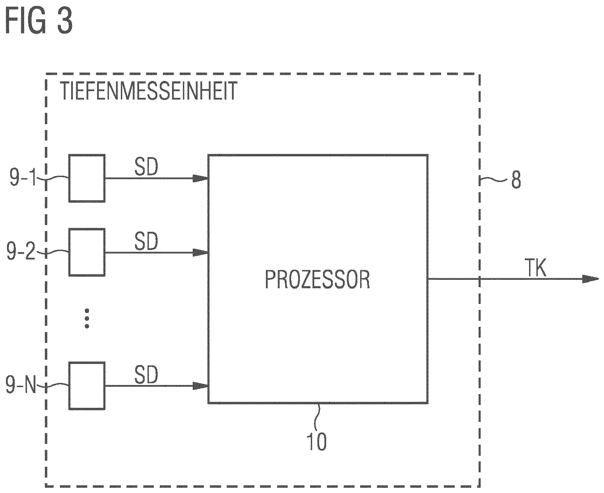

Bei dem in Fig. 2 dargestellten Ausführungsbeispiel verfügt das Kamera-Assistenzsystem 1 über eine Tiefenmesseinheit 8. Das Kamera-Assistenzsystem 1 weist eine Tiefenmesseinheit 8 auf, die eine Tiefenkarte TK bereitstellt, welche von der Bildverarbeitungseinheit 2 des Kamera-Assistenzsystems 1 zur Erzeugung der virtuellen dreidimensionalen Projektionsfläche PF verarbeitet wird. Die Tiefenmesseinheit 8 ist geeignet, eine momentane Entfernung von Aufnahmeobjekten, insbesondere des in Fig. 2 dargestellten Aufnahmemotivs AM, von der Kamera 5 zu messen. Hierzu kann die Tiefenmesseinheit 8 durch Messung einer Laufzeit oder durch Messung einer Phasenverschiebung von Schallwellen oder von elektromagnetischen Wellen eine entsprechende Tiefenkarte TK generieren. Die Tiefenmesseinheit 8 kann über einen oder mehrere Sensoren 9 verfügen, wie auch in dem Ausführungsbeispiel gemäß Fig.3 dargestellt. Bei einer möglichen Ausführungsform weist die Tiefenmesseinheit 8 mindestens einen Sensor 9 zur Erfassung von elektromagnetischen Wellen, insbesondere Lichtwellen, auf. Weiterhin kann die Tiefenmesseinheit 8 einen Sensor 9 zur Erfassung von Schallwellen, insbesondere von Ultraschallwellen, aufweisen. Die von den Sensoren 9 der Tiefenmesseinheit 8 erzeugten Sensordaten SD werden bei einer möglichen Ausführungsform von einem Prozessor 10 der Tiefenmesseinheit 8 zur Erzeugung der Tiefenkarte TK fusioniert, wie auch im Zusammenhang mit Fig. 3 näher beschrieben.

Bei einer möglichen Ausführungsform weist die Tiefenmesseinheit 8 mindestens einen optischen Kamerasensor zur Erzeugung eines oder mehrerer Tiefenbilder auf, die durch den Prozessor 10 der Tiefenmesseinheit 8 zur Generierung der Tiefenkarte TK verarbeitet werden. Die Tiefenmesseinheit 8 gibt die generierte Tiefenkarte TK an die Bildverarbeitungseinheit 2 des Kamera-Assistenzsystems 1 aus, wie in Fig. 2 schematisch dargestellt. Bei einer möglichen Ausführungsform weist die Tiefenmesseinheit 8 eine Stereo-Bildkamera auf, die optische Kamerasensoren 9 zur Erzeugung von Stereo-Kamerabildpaaren enthält, die durch den Prozessor 10 der Tiefenmesseinheit 8 zur Generierung der Tiefenkarte TK verarbeitet werden. Bei einer möglichen Ausführungsform weist die Bildverarbeitungseinheit 2 ein Tiefenkartenfilter zur mehrdimensionalen Filterung der von der Tiefenmesseinheit 8 bereitgestellten Tiefenkarte TK auf. Bei einer alternativen Implementierung befindet sich das Tiefenkartenfilter am Ausgang der Tiefenmesseinheit 8.

Bei dem in Fig. 2 dargestellten Ausführungsbeispiel des Kamera-Assistenzsystems 1 wird das von der Kamera 5 erhaltene Kamerabild KB auf eine virtuelle dreidimensionale Projektionsfläche PF durch die Bildverarbeitungseinheit 2 projiziert, deren Topologie aus der mittels der Tiefenmesseinheit 8 ermittelten Tiefenkarte TK erstellt wird. Da die Auflösung der von der Tiefenmesseinheit 8 generierten Tiefenkarte TK geringer als die Bildauflösung der Kamera 5 selbst sein kann, erfolgt bei einer möglichen Ausführungsform eine mehrdimensionale Filterung, insbesondere Glättung, der Tiefenkarte TK, wobei Parameter P, wie beispielsweise Stärke und Radius, einstellbar sind.

Bei einer möglichen Ausführungsform führt die Bildverarbeitungseinheit 2 anhand der von der Tiefenmesseinheit 8 bereitgestellten Tiefenkarte TK und anhand des von der Kamera 5 erhaltenen Kamerabildes KB eine Kalibrierung aus, welche die räumliche Relativlage der Tiefenmesseinheit 8 zu der Kamera 5 berücksichtigt. Bei dieser Ausführungsform kann die Messgenauigkeit sowie die Lage der Sensoren 9 der Tiefenmesseinheit 8 relativ zu der Kamera 5 sowie die Genauigkeit der Schärfeneinstellung (Skala, Antrieb) des Kameraobjektivs 5A entscheidend sein. Es ist daher vorteilhaft, bei einer möglichen Ausführungsform eine Kalibrierfunktion mittels zusätzlicher Kontrastmessung vorzunehmen. Diese Kalibrierung kann typischerweise in mehreren Messentfernungen durchgeführt werden, um die lokalen Kontrastwerte zu optimieren. Anhand dieser Messwerte bzw. Stützstellen wird daraufhin die Kalibrierkurve erstellt.

Bei einer weiteren möglichen Ausführungsform des erfindungsgemäßen Kamera-Assistenzsystems 1 kann die Bildverarbeitungseinheit 2 anhand von durch die Tiefenmesseinheit 8 im Zeitverlauf bereitgestellten Tiefenkarten TK einen Bewegungsvektor und eine vermutliche zukünftige Position des Aufnahmemotivs AM innerhalb eines von der Kamera 5 empfangenen Kamerabildes KB ermitteln und daraus eine Veränderung der lokalen Abbildungsschärfe AS des empfangenen Kamerabildes KB ableiten. Durch diese Vorausberechnung können Verzögerungen, welche durch die Messung und Verarbeitung des Kamerabildes KB verursacht werden, kompensiert werden.

Fig. 3 zeigt eine mögliche Implementierung der Tiefenmesseinheit 8 der in Fig. 2 dargestellten Ausführungsform des erfindungsgemäßen Kamera-Assistenzsystems 1. Die Tiefenmesseinheit 8 weist mindestens einen Sensor 9 auf. Bei diesem Sensor 9 kann es sich bei einer möglichen Ausführungsform um einen Sensor zur Erfassung von elektromagnetischen Wellen, insbesondere von Lichtwellen, handeln. Weiterhin kann es sich bei dem Sensor 9 um einen Sensor von Erfassung von Schallwellen bzw. akustischen Wellen, insbesondere von Ultraschallwellen, handeln. Bei dem in Fig. 3 dargestellten Ausführungsbeispiel der Tiefenmesseinheit 8 verfügt die Tiefenmesseinheit 8 über eine Anzahl von N Sensoren 9-1 bis 9-N. Die von den Sensoren 9 jeweils erzeugten Sensordaten SD werden einem Prozessor 10 der Tiefenmesseinheit 8 zugeführt. Der Prozessor 10 generiert aus den zugeführten Sensordaten SD der verschiedenen Sensoren 9 eine Tiefenkarte TK. Hierzu kann der Prozessor 10 eine Sensordatenfusion ausführen. Als Sensordatenfusion wird allgemein die Verknüpfung von Ausgabedaten mehrerer Sensoren 9 bezeichnet. Mithilfe der Sensordatenfusion kann eine Tiefenkarte TK mit höherer Qualität erstellt werden. Die Sensoren 9 können sich in getrennten Einheiten befinden.

Die verschiedenen Sensoren 9 der Tiefenmesseinheit 8 können auf unterschiedlichen Messprinzipien beruhen. Beispielsweise kann eine Gruppe von Sensoren 9 zur Erfassung von elektromagnetischen Wellen vorgesehen sein, während eine andere Gruppe von Sensoren 9 zur Erfassung von Schallwellen, insbesondere von Ultraschallwellen, vorgesehen ist. Die von den verschiedenen Sensoren 9 der Tiefenmesseinheit 8 erzeugten Sensordaten SD werden von dem Prozessor 10 der Tiefenmesseinheit 8 zur Erzeugung der Tiefenkarte TK fusioniert. Beispielsweise kann die Tiefenmesseinheit 8 als Sensoren 9 Kamerasensoren, Radarsensoren, Ultraschallsensoren oder Lidar-Sensoren umfassen. Die Radarsensoren, die Ultraschallsensoren sowie die Lidar-Sensoren basieren auf dem Messprinzip der Laufzeitmessung. Bei der Laufzeitmessung werden indirekt Entfernungen und Geschwindigkeiten anhand der Zeit gemessen, die ein Messsignal benötigt, um auf ein Objekt zu treffen und wieder zurückgeworfen zu werden.

Bei den Kamerasensoren erfolgt keine Laufzeitmessung, sondern die Generierung von Kamerabildern KB als visuelle Repräsentation der Umgebung. Dabei können neben Farbinformationen auch Textur- und Kontrastinformationen gewonnen werden. Da die Messungen mit der Kamera 5 auf einem passiven Messprinzip basieren, werden Gegenstände bzw. Objekte allerdings nur erfasst, sofern sie von Licht angestrahlt werden. Die Qualität der von Kamerasensoren erzeugten Kamerabilder KB kann gegebenenfalls durch Umweltbedingungen wie beispielsweise Schnee, Eis oder Nebel oder bei herrschender Dunkelheit eingeschränkt sein. Darüber hinaus liefern Kamerabilder KB keine Abstandsinformationen. Daher weist die Tiefenmesseinheit 8 vorzugsweise bei einer möglichen Ausführungsform mindestens einen Radarsensor, einen Ultraschallsensor oder einen Lidar-Sensor auf.

Um 3D-Kamerabilder KB zu erhalten, können bei einer möglichen Ausführungsform der Tiefenmesseinheit 8 auch mindestens zwei Kamerasensoren vorgesehen sein. Bei einer möglichen Ausführungsform weist die Tiefenmesseinheit 8 eine Stereo-Bildkamera auf, die optische Kamerasensoren zur Erzeugung von Stereo-Kamerabildpaaren beinhaltet. Diese Stereo-Kamerabildpaare werden durch den Prozessor 10 der Tiefenmesseinheit 8 zur Generierung der Tiefenkarte TK verarbeitet. Durch die Verwendung unterschiedlicher Sensoren 9 kann die Zuverlässigkeit der Tiefenmesseinheit 8 bei unterschiedlichen Umgebungsbedingungen erhöht werden. Weiterhin kann durch die Verwendung unterschiedlicher Sensoren 9 und anschließender Sensordatenfusion die Messgenauigkeit und die Qualität der Tiefenkarte TK gesteigert werden.

Die Sichtbereiche von Sensoren 9 sind üblicherweise beschränkt. Durch die Verwendung mehrerer Sensoren 9 innerhalb der Tiefenmesseinheit 8 lässt sich der Sichtbereich der Tiefenmesseinheit 8 steigern. Weiterhin kann durch die Verwendung mehrerer Sensoren 9 die Auflösung von Mehrdeutigkeiten vereinfacht werden. Zusätzliche Sensoren 9 liefern zusätzliche Informationen und erweitern so die Kenntnis der Tiefenmesseinheit 8 hinsichtlich der Umgebung. Durch die Verwendung unterschiedlicher Sensoren 9 kann zudem die Messrate bzw. die Rate bei der Erzeugung der Tiefenkarte TK gesteigert werden.

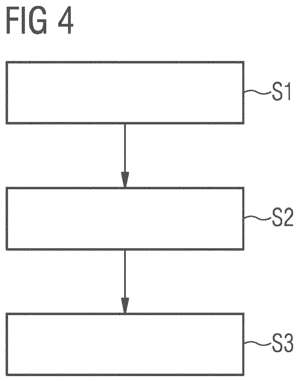

Fig. 4 zeigt ein einfaches Ablaufdiagramm zur Erläuterung der Funktionsweise des erfindungsgemäßen Verfahrens zur Unterstützung bei der Fokussierung einer Kamera 5. Bei dem in Fig. 4 dargestellten Ausführungsbeispiel umfasst das Verfahren im Wesentlichen drei Hauptschritte.

In einem ersten Schritt S1 wird ein Kamerabild KB eines Aufnahmemotivs AM innerhalb eines Blickfeldes BF einer Kamera durch eine Bildverarbeitungseinheit empfangen.

In einem weiteren Schritt S2 wird das empfangene Kamerabild KB durch die Bildverarbeitungseinheit auf eine virtuelle dreidimensionale Projektionsfläche PF projiziert. Dabei entsprechen die Höhenwerte der virtuellen dreidimensionalen Projektionsfläche PF einer lokalen Abbildungsschärfe AS des empfangenen Kamerabildes KB.

In einem weiteren Schritt S3 wird das auf die virtuelle dreidimensionale Projektionsfläche PF projizierte Kamerabild KB auf einer Anzeigeeinheit angezeigt. Bei dieser Anzeigeeinheit kann es sich beispielsweise um die in den Figuren 1, 2 dargestellten Anzeigeeinheiten 3 des Kamera-Assistenzsystems 1 handeln.

Bei einer möglichen Ausführungsform wird die Abbildungsschärfe AS des empfangenen Kamerabildes KB in Abhängigkeit einer vordefinierten Fokusmetrik FM im Schritt S2 berechnet. Dabei kann die lokale Abbildungsschärfe AS auf Basis von ermittelten Kontrastwerten des von der Kamera 5 empfangenen unverarbeiteten Kamerabildes KB und/oder auf Basis von ermittelten lokalen Kontrastwerten des von der Bildverarbeitungseinheit 2 daraus erzeugten verarbeiteten Nutz-Kamerabildes NKB anhand einer kontrastwertbasierten vordefinierten Fokusmetrik FM berechnet werden und anschließend mit einem einstellbaren Skalierungsfaktor SF zur Berechnung der Höhenwerte der virtuellen dreidimensionalen Projektionsfläche PF multipliziert werden. Alternativ kann die virtuelle dreidimensionale Projektionsfläche PF auch auf Basis einer Tiefenkarte TK erzeugt werden, die durch eine Tiefenmesseinheit 8 bereitgestellt wird. Dies setzt voraus, dass das Kamera-Assistenzsystem 1 über eine entsprechende Tiefenmesseinheit 8 verfügt.

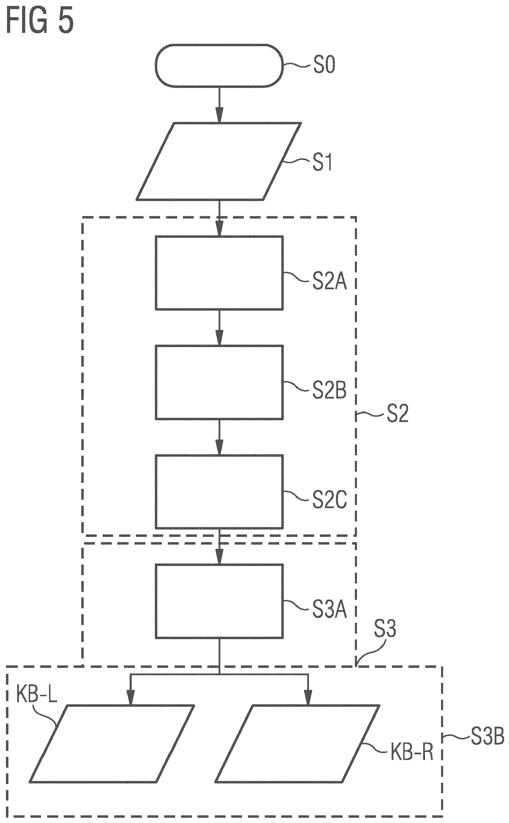

Fig. 5 zeigt ein weiteres Ablaufdiagramm zur Darstellung einer Ausführungsvariante des in Fig. 4 dargestellten Verfahrens zur Unterstützung bei der Fokussierung einer Kamera 5.

Nach einem Startschritt S0 erfolgt im Schritt S1 die Übertragung eines Kamerabildes KB eines Aufnahmemotivs AM an eine Bildverarbeitungseinheit 2. Das Kamerabild KB ist ein zweidimensionales Kamerabild KB, das eine Matrix von Pixeln beinhaltet.

In einem weiteren Schritt S2 wird das empfangene Kamerabild KB durch die Bildverarbeitungseinheit 2 des Kamera-Assistenzsystems 1 auf eine virtuelle dreidimensionale Projektionsfläche PF, deren Höhenwerte einer lokalen Abbildungsschärfe AS des empfangenen zweidimensionalen Kamerabildes KB entsprechen, projiziert. Dieser zweite Schritt S" kann mehrere Teilschritte umfassen, wie in dem Ablaufdiagramm gemäß Fig. 5 dargestellt.

In einem Teilschritt S2A kann die lokale Abbildungsschärfe AS des empfangenen Kamerabildes KB in Abhängigkeit einer vorgegebenen Fokusmetrik FM berechnet werden. Bei dieser Fokusmetrik FM kann es sich beispielsweise um eine kontrastwertbasierte Fokusmetrik FM handeln. Bei einer möglichen Implementierung kann die lokale Abbildungsschärfe AS im Teilschritt S2A auf Basis von ermittelten lokalen Kontrastwerten des von der Kamera 5 empfangenen unverarbeiteten Kamerabildes KB und/oder auf Basis von ermittelten lokalen Kontrastwerten des von der Bildverarbeitungseinheit 2 daraus erzeugten verarbeiteten Nutz-Kamerabildes NKB anhand einer kontrastwertbasierten Fokusmetrik FM berechnet werden. Diese lokale Abbildungsschärfe AS kann zusätzlich bei einer möglichen Implementierung mit einem einstellbaren Skalierungsfaktor SF zur Berechnung der Höhenwerte der virtuellen dreidimensionalen Projektionsfläche PF multipliziert werden. In einem weiteren Teilschritt S2B wird auf Basis der Höhenwerte die virtuelle dreidimensionale Projektionsfläche PF erzeugt. In einem weiteren Teilschritt S2C wird das zweidimensionale Kamerabild KB auf die im Teilschritt S2B erzeugte virtuelle dreidimensionale Projektionsfläche PF projiziert. Das Kamerabild KB wird auf die virtuelle dreidimensionale Projektionsfläche PF projiziert, deren Höhenwerte bei einer möglichen Implementierung den lokalen Kontrastwerten entsprechen. Auf die erzeugte virtuelle dreidimensionale Projektionsfläche PF wird das Kamerabild KB gemappt bzw. projiziert.

Bei dem in Fig. 5 dargestellten Ausführungsbeispiel verfügt das verwendete Anzeigegerät bzw. die Anzeigeeinheit 3 über eine 3D-Anzeigemöglichkeit, beispielsweise ein Stereodisplay mit entsprechender 3D-Brille (Polfilter, Shutter oder Anaglyph) oder ein autostereoskopisches Display. Zum Anzeigen des auf die virtuelle dreidimensionale Projektionsfläche PF projizierten Kamerabildes KB der Kamera 5 wird in einem Teilschritt S3A zunächst ein Stereo-Bildpaar berechnet, das ein Kamerabild KB-L für das linke Auge und ein Kamerabild KB-R für das rechte Auge des Betrachters umfasst. In einem weiteren Teilschritt S3B wird das errechnete Stereo-Bildpaar auf dem 3D-Anzeigegerät 3 angezeigt, nämlich das linke Kamerabild KB-L für das linke Auge und das rechte Kamerabild KB-R für das rechte Auge. Das Stereo-Bildpaar wird bei dem in Fig. 5 dargestellten Ausführungsbeispiel auf einer 3D-Anzeigeeinheit 3 des Kamera-Assistenzsystems 1 angezeigt. Verfügt das Kamera-Assistenzsystem 1 über eine 3D-Anzeigeeinheit 3, kann das auf die virtuelle dreidimensionale Projektionsfläche PF projizierte Kamerabild KB zur Erzeugung eines Stereo-Bildpaares direkt dreidimensional angezeigt werden.

Sofern das Kamera-Assistenzsystem 1 nicht über eine 3D-Anzeigeeinheit 3 verfügt, wird bei einer möglichen Ausführungsform durch die Bildverarbeitungseinheit 2 auf Basis des auf die virtuelle dreidimensionale Projektionsfläche PF projizierten Kamerabildes KB eine Pseudo-3D-Darstellung mit künstlich generierten Schatten oder eine Schrägansicht berechnet, welche auf der zur Verfügung stehenden 2D-Anzeigeeinheit 3 des Kamera-Assistenzsystems 1 angezeigt wird.

Damit die Darstellung nicht zu stark fragmentiert ausgegeben wird, besteht bei einer möglichen Ausführungsform die Möglichkeit, eine Filterung vorzunehmen, welche die dargestellte Fläche harmonischer ausformt. Hierbei kann das angezeigte Bild im Bereich der Schärfentiefe ST eine einem Ölgemälde ähnelnde 3D-Struktur erhalten. Weiterhin kann bei einer möglichen Ausführungsform ein Schwellenwert vorgesehen werden, über dem ein 3D-Mappung erfolgt. Dies hat zur Folge, dass die virtuelle Projektionsfläche PF unterhalb eines gewissen Kontrastwertes eben ist.

Bei einer weiteren möglichen Ausführungsform kann die Stärke der 3D-Darstellung auf der 3D-Anzeigeeinheit 3 eingestellt werden. Die Stärke der 3D-Darstellung, d.h. wie stark sich Stellen mit hohen Kontrastwerten dem Betrachter nähern, kann mithilfe eines Skalierungsfaktors SF eingestellt werden. Somit bleibt der Bildinhalt des projizierten Kamerabildes KB für den Nutzer immer klar erkennbar und wird nicht durch überlagerte Pixelwolken oder sonstige Darstellungen verdeckt.

Um eine Kontrasterkennung zu optimieren, kann das Kamera-Assistenzsystem 1 zusätzlich zu dem prozessierten Kamerabild KB auch ein Kamerabild KB mit hohem Dynamikumfang berücksichtigen, um Quantisierungs- und Begrenzungseffekte, die speziell in sehr dunklen oder hellen Bereichen auftreten und zur Reduktion der Qualität bei komplett prozessierten Kamerabildern KB führen, zu vermindern.

Es ist weiterhin möglich, dass ein Bild mit hohem Kontrastumfang zusätzlich zu dem prozessierten Nutz-Kamerabild NKB von der Kamera 5 bereitgestellt wird. Bei einer weiteren Ausführungsform erzeugt das System aus dem Bild mit hohem Dynamikumfang das in den entsprechenden Farbraum und den gewünschten Dynamikbereich konvertierte Nutz-Kamerabild NKB. Die dafür notwendigen Informationen, insbesondere LUT und Farbraum, können entweder über eine Datenkommunikation durch die Bildverarbeitungseinheit 2 von der Kamera 5 bezogen werden oder an dem Gerät selber eingestellt werden.

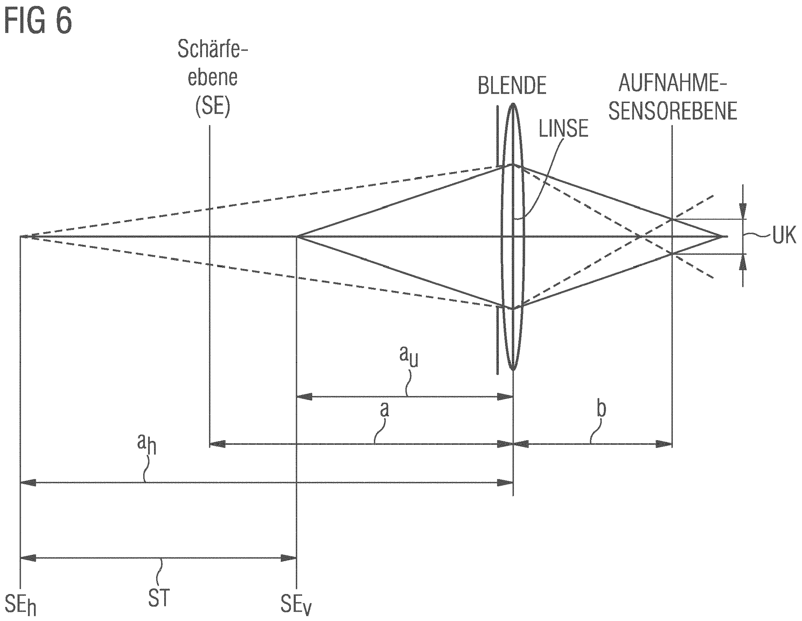

Fig. 6 zeigt schematisch die Schärfentiefe ST bei einer Kamera 5. Das Kameraobjektiv 5A der Kamera 5 verfügt über eine Blende, hinter der sich eine Aufnahmesensorebene des Aufnahmesensors 5B befindet, wie in Fig. 6 dargestellt. In der Aufnahmesensorebene des Aufnahmesensors 5B kann ein Unschärfekreis UK definiert werden. In einem realen Abbildungssystem, bei dem sowohl das Auge des Betrachters oder Nutzers als auch der Aufnahmesensor 5B infolge seiner diskreten Pixel ein begrenztes Auflösungsvermögen haben, stellt der Unschärfekreis UK die Abweichung von eine scharfen, also punktförmigen Abbildung dar, die tolerierbar ist. Gibt man einen akzeptablen Durchmesser des Unschärfekreises U an, so liegt der Objektbereich, der scharf abgebildet wird, zwischen den Grenzen $SE_v$ und $SE_h$ des Schärfentiefenbereichs ST, wie in Fig. 6 dargestellt. Fig. 6 zeigt die Objektweite a zwischen der Schärfenebene SE und der Linse des Kameraobjektivs 5A. Weiterhin zeigt Fig. 6B die Bildweite b zwischen der Linse und der Aufnahmesensorebene des Aufnahmesensors 5B.

Das Kameraobjektiv 5A der Kamera 5 kann nicht wie das Auge des Betrachters auf unterschiedliche Objektabstände akkommodieren. Deshalb muss für verschiedene Entfernungen der Abstand zwischen dem Kameraobjektiv 5A bzw. dessen Linse und der Aufnahmesensorebene variiert werden. Der Lichtstrom, der auf den Aufnahmesensor 5B fällt, kann mithilfe der Blende des Kameraobjektivs 5A geregelt werden. Das Maß für die anfallende Lichtmenge ist dabei die relative Öffnung

$$\frac{D_{Blende}}{F'}$$

, wobei $D_{BLENDE}$ der Blendendurchmesser des Kameraobjektivs 5A und F' die Brennweite (Brennweite BW) des Kameraobjektivs 5A darstellt. Die Blendenzahl k der Kamera 5 ergibt sich aus dem Verhältnis der Brennweite F' und dem Blendendurchmesser $D_{BLENDE}$ der Blende des Kameraobjektivs 5A :

$$k = F'/D_{BLENDE}$$

Allgemein gilt für die vordere Grenze $a_v$ und hintere Grenze $a_h$ der Schärfetiefe ST:

$$a_v = \frac{aF'^2}{F'^2 - U'k\ (a+F')}$$

und

$$a_h = \frac{aF'^2}{F'^2 + U'k \cdot (a+F')}$$

wobei U' der Durchmesser des Unschärfekreises UK ist,
wobei F' die eingestellte Brennweite BW ist,
wobei k die eingestellte Blendenzahl ist, und
wobei a die Objektweite ist.

Als Schärfentiefe ST ergibt sich dann ST = $\Delta$a = $a_v$ - an.

Die Grenzen der Schärfetiefe ST kann bei einer mögliche Ausführungsform anhand der oben angegebenen Gleichungen durch einen Prozessor oder FPGA der Bildverarbeitungseinheit 2 in Echtzeit erfolgen. Alternativ erfolgt die Bestimmung der beiden Grenzen der Schärfetiefe ST mit Hilfe von gespeicherten Auslesetabellen (Look Up Table ).

Bei einer möglichen Ausführungsform des erfindungsgemäßen Kamera-Assistenzsystems 1 erhält die Bildverarbeitungseinheit 2 über eine Schnittstelle die durch die Einstelleinheit 6 des Kamera-Assistenzsystems 1 eingestellte Fokuslage FL als Parameter P und überlagert die Fokuslage FL als semitransparente Schärfenebene SE dem auf die virtuelle dreidimensionale Projektionsfläche PF projizierten Kamerabild KB zur Anzeige auf der Anzeigeeinheit 3 des Kamera-Assistenzsystems 1, wie in den Figuren 7A, 7B dargestellt. Fig. 7A zeigt eine Frontalansicht auf die Anzeigefläche einer Anzeigeeinheit 3, wobei als Beispiel eines Aufnahmemotivs AM ein Kopf einer Statue dargestellt ist. In den meisten Anwendungsfällen, insbesondere bei Bewegtbild-Kameras bzw. Laufbildkameras, ist allerdings das Aufnahmemotiv AM dynamisch beweglich und nicht statisch angeordnet. Bei einer bevorzugten Ausführungsform ist ein Blickpunkt auf das auf die virtuelle dreidimensionale Projektionsfläche projizierte Kamerabild KB, welches auf der Anzeigeeinheit 3 des Kamera-Assistenzsystems 1 angezeigt wird, einstellbar. Fig. 7B zeigt eine Ansicht auf das Aufnahmemotiv AM von vorne mit schräg oben gelegenem Blickpunkt. Man erkennt deutlich, wie die semitransparente Schärfenebene SE die Oberfläche des Aufnahmemotivs AM schneidet. Der Blickpunkt auf die 3D-Szene und die Schärfenebene SE kann so gewählt werden, dass der Betrachter bzw. Nutzer eine Ansicht schräg von vorne einnehmen kann, wie in Fig. 7B dargestellt, um die Verschiebung der Schärfenebene SE in der Tiefe bzw. in z-Richtung besser beurteilen zu können. Um das dediziert dargestellte Kamerabild KB bei großen Tiefendifferenzen nicht zu stark zu verklüften, können Schwellenwerte definiert werden, ab denen das projizierte Kamerabild KB des Aufnahmemotivs AM auf jeweils einer maximalen hinteren Ebene und/oder vorderen Ebene angezeigt wird.

Anstatt nur die Schärfenebene SE zu visualisieren, ist es auch möglich, den Schärfentiefenbereich der Schärfentiefe ST durch zwei zusätzliche Ebenen für die hintere Grenze und für die vordere Grenze der Schärfentiefe ST zu visualisieren wie in den Figuren 8A, 8B dargestellt. Fig. 8A zeigt eine Frontalansicht einer Anzeigefläche einer Anzeigeeinheit 3 des Kamera-Assistenzsystems 1. Fig. 8B zeigt wiederum eine Anzeige von schräg vorne auf das Aufnahmemotiv AM durch entsprechende perspektivische Drehung. In Fig. 8B erkennt man deutlich zwei leicht voneinander beabstandete schräge Ebenen $SE_v$, $SE_h$ für die vordere Grenze $a_v$ und hintere Grenze $a_h$ der Schärfentiefe ST. Zwischen der vorderen Schärfenebene $SE_v$ und der hinteren Schärfenebene $SE_h$, welche die Grenzen der Schärfentiefe ST definieren, befindet sich die eigentliche Schärfenebene SE, wie in Fig. 6 schematisch dargestellt. Die Bildverarbeitungseinheit 2 kann dem auf die virtuelle dreidimensionale Projektionsfläche PF projizierten Kamerabild KB, welches das Aufnahmemotiv AM darstellt, eine erste semitransparente Ebene $SE_v$ zur Darstellung der vorderen Grenze der Schärfentiefe ST und eine zweite semitransparente Ebene $SE_h$ zur Darstellung der hinteren Grenze der Schärfentiefe ST zur Anzeige auf der Anzeigeeinheit 3 des Kamera-Assistenzsystems 1 überlagern, wie in den Figuren 8A, 8B dargestellt. Bei einer möglichen Ausführungsform kann die semitransparente Schärfenebene SE sowie die beiden Schärfenebenen $SE_V$, $SE_h$ zur Darstellung der vorderen Grenze der Schärfentiefe ST und zur Darstellung der hinteren Grenze der Schärfentiefe ST eine Schärfeskala schneiden, die an einem Rand der Anzeigefläche der Anzeigeeinheit 3 des Kamera-Assistenzsystems 1 dem Nutzer angezeigt wird.

Die Fokusdistanz bzw. Fokuslage FL wird vorzugsweise über eine Datenschnittstelle von dem Kamera-System an die Bildverarbeitungseinheit 2 übermittelt und anschließend als semitransparente Ebene SE dem dargestellten 3D-Bild des Aufnahmemotivs AM überlagert, wie in den Figuren 7A, 7B dargestellt. Nach Änderung der Fokuseinstellung bzw. Fokuslage FL kann diese Schärfenebene SE in der Tiefe bzw. in z-Richtung verschoben werden. Anhand der sichtbaren Überschneidungen der semitransparent dargestellten Schärfenebene SE mit dem in dem angezeigten Kamerabild KB dargestellten Aufnahmemotiv AM kann ein Nutzer eine präzise Schärfeneinstellung der Kamera 5 intuitiv und schnell ausführen Bei einer möglichen Ausführungsform werden Bildbereiche des dargestellten Kamerabildes KB, die vor der Schärfenebene SE liegen, klar dargestellt, während Elemente hinter der dargestellten Schärfenebene SE durch die semitransparente Ebene SE gefiltert dargestellt werden.

Um einen Bildeindruck nicht zu stark zu stören, kann die dargestellte semitransparente Schärfenebene SE auch nur lokal in gewissen Tiefenbereichen der virtuellen Projektionsfläche PF dargestellt werden. Beispielsweise kann die semitransparente Ebene SE nur in Bereichen dargestellt werden, deren Entfernungen in einem gewissen Bereich hinter der aktuellen Schärfenebene SE liegen (d.h. aktuelle Entfernung bis aktuelle Entfernung +/- x %). Auch das Einstellen einer Mindestbreite des dargestellten Schärfentiefenbereiches ST ist möglich.

Falls die Anzeigeeinheit 3 ein berührungsempfindliches Touchscreen aufweist, kann der der Nutzer auch durch Fingergesten Eingaben machen. Bei dieser Ausführungsform ist somit die Einstelleinheit 6 in der Anzeigeeinheit 3 integriert.

Durch Ablesen der am Rand der Anzeigefläche der Anzeigeeinheit 3 befindlichen Schärfenskala kann der Nutzer auch eine quantitative Information hinsichtlich der Lage der Schärfenebene SE bzw. der Grenzschärfenebenen der Schärfentiefe ST ablesen. Bei einer weiteren möglichen Ausführungsform kann dieser Wert auch zusammen mit dem erzeugten Nutz-Kamerabild NKB in dem Bildspeicher 7 des Kamera-Assistenzsystems 1 abgelegt werden. Dies erleichtert eine weitere Datenverarbeitung des zwischengespeicherten Nutz-Kamerabildes NKB. Bei einer möglichen Ausführungsform kann die Bildverarbeitungseinheit 2 anhand einer momentan Irisblendenöffnung BÖ der Blende sowie anhand der momentan eingestellten Fokuslage FL sowie ggf. anhand der momentan eingestellten Brennweite des Kameraobjektivs 5A die momentane Schärfentiefe ST automatisch ermitteln bzw. berechnen. Dies kann beispielsweise anhand zugehöriger gespeicherter Schärfentiefentabellen für den jeweils momentan verwendeten Kameraobjektivtyp des Kameraobjektivs 5A erfolgen.

Bei dem erfindungsgemäßen Kamera-Assistenzsystem 1 kann bei einer möglichen Ausführungsform zwischen verschiedenen Anzeigeoptionen umgeschaltet werden. Beispielsweise hat der Nutzer die Möglichkeit, zwischen einer Anzeige gemäß Figuren 7A, 7B und einer Anzeige gemäß Figuren 8A, 8B umzuschalten. In dem ersten Anzeigemodus erfolgt somit die Anzeige der Schärfenebene SE aus Sicht eines einstellbaren Blickpunktes bzw. Blickwinkels. In einem zweiten Anzeigemodus erfolgt eine Anzeige der vorderen Grenze und der hinteren Grenze der Schärfentiefe ST, wie in den Figuren 8A, 8B dargestellt. Weiterhin kann bei einer möglichen Ausführungsvariante die Farbe und/oder Struktur sowie die Dichte der Schärfenindikation seitens des Nutzers mithilfe der Nutzerschnittstelle gewählt werden.

Bei einer weiteren möglichen Ausführungsform besteht zudem die Möglichkeit, bei dem Kamera-Assistenzsystem 1 zwischen manueller Fokussierung und Autofokussierung umzuschalten. Das erfindungsgemäße Verfahren zur Unterstützung der Fokussierung, wie es beispielsweise in Fig. 4 dargestellt ist, wird bei gewählter manueller Fokussierung der Kamera 5 ausgeführt.

Die in den verschiedenen Ausführungsvarianten gemäß Figuren 1 bis 8 dargestellten Ausführungsbeispiele lassen sich miteinander kombinieren. Beispielsweise lässt sich das in Fig. 1 dargestellte Kamera-Assistenzsystem 1 mit einer Abbildungsschärfe-Detektionseinheit 4 mit dem in Fig. 2 dargestellten Kamera-Assistenzsystem 1, welches über eine Tiefenmesseinheit 8 verfügt, kombinieren. Bei dieser Ausführungsform wird die virtuelle Projektionsfläche PF durch die Bildverarbeitungseinheit 2 unter Berücksichtigung der von der Tiefenmesseinheit 8 generierten Tiefenkarte TK und unter Berücksichtigung der von der Abbildungsschärfe-Detektionseinheit 4 berechneten Abbildungsschärfe AS generiert. Hierdurch lässt sich die Präzision bzw. Qualität der generierten virtuellen Projektionsfläche PF zusätzlich steigern. Verfügt das System 1 sowohl über eine Abbildungsschärfe-Detektionseinheit 4 als auch über eine Tiefenmesseinheit 8, kann bei einer weiteren Ausführungsvariante je nach Anwendungsfall die Nutzereingabe auch zwischen einer Berechnung der virtuellen Projektionsfläche PF auf Grundlage der Abbildungsschärfe AS oder auf Grundlage der Tiefenkarte TK umgeschaltet werden.

Weitere Ausführungsformen sind möglich. Beispielsweise kann das von dem Aufnahmesensor 5B generierte Kamerabild KB in einem eigenen Zwischenspeicher zwischengespeichert werden, auf den die Bildverarbeitungseinheit 2 Zugriff hat. Darüber hinaus können in einem derartigen Zwischenspeicher auch mehrere sequenziell entstehende Kamerabilder KB zwischengespeichert werden. Die Bildverarbeitungseinheit 2 kann zudem anhand mehrerer im Zeitverlauf bereitgestellter Tiefenkarten TK automatisch einen Bewegungsvektor und eine vermutliche zukünftige Position des Aufnahmemotivs AM innerhalb eines von der Kamera 5 empfangenen Bildes ermitteln und daraus eine Veränderung der lokalen Abbildungsschärfe AS des empfangenen Kamerabildes KB ableiten. Durch diese Vorausberechnung bzw. Prädiktion ist es möglich, Verzögerungen zu kompensieren, die durch die Messung und Verarbeitung des Kamerabildes KB entstehen. Bei einer weiteren möglichen Implementierung kann auch eine Folge von Tiefenkarten TK in einem Zwischenspeicher des Kamera-Assistenzsystems 1 abgelegt werden. Bei einer weiteren möglichen Implementierungsvariante kann die Bildverarbeitungseinheit 2 auch die virtuelle dreidimensionale Projektionsfläche PF auf Grundlage mehrerer in Folge gebildeter Tiefenkarten TK der Tiefenmesseinheit 8 ermitteln. Weiterhin kann auch eine Vorausberechnung bzw. Prädiktion der virtuellen dreidimensionalen Projektionsfläche PF auf Grundlage einer erfassten Folge von Tiefenkarten TK, die von der Tiefenmesseinheit 8 ausgegeben werden, erfolgen.

Bei einer weiteren möglichen Ausführungsform kann je nach Anwendungsfall und Benutzereingabe die Berechnung der Tiefenkarte TK durch die Tiefenmesseinheit 8 auf Grundlage von Sensordaten SD erfolgen, die von entsprechend selektierten Sensoren 9 erzeugt werden.

Die in den Blockschaltbildern gemäß Figur 1,2 dargestellten Einheiten können zumindest teilweise durch programmierbare Softwaremodule implementiert werden. Bei einer möglichen Ausführungsform führt ein Prozessor der Bildverarbeitungseinheit 2 einen Erkennungsalgorithmus zur Erkennung signifikanter Objektteile des in dem empfangenen Kamerabild KB enthaltenen Aufnahmemotivs AM aus und kann bei Bedarf über eine Schnittstelle entsprechende Bildausschnitte innerhalb des Kamerabildes KB mit erhöhter Auflösung von der Kamera 5 anfordern. Hierdurch kann die Datenmenge der Bildübertragungen reduziert werden. Weiterhin kann das System 1 in Fällen, bei denen die Sensorauflösung des Aufnahmesensors 5B geringer ist als die Auflösung des Monitors der Anzeigeeinheit 3, Bildausschnitte, in denen signifikante Objektteile enthalten sind, über den Erkennungsalgorithmus detektieren und diese Bildausschnitte zusätzlich zum Gesamtkamerabild KB (das meist in reduzierter Auflösung vorliegt) von der Kamera 5 anfordern. Dies erfolgt vorzugsweise über eine bidirektionale Schnittstelle. Diese bidirektionale Schnittstelle kann auch durch eine standardisierte Netzwerkschnittstelle gebildet werden. Bei einer möglichen Ausführungsform werden Kompressionsdatenformate zur Übertragung des Gesamt- und Teilbildes bzw. Bildausschnittes verwendet.

Das erfindungsgemäße Kamera-Assistenzsystem 1 eignet sich insbesondere für die Verwendung bei Bewegtbild-Kameras bzw. Laufbildkameras, welche geeignet sind, Kamerabildfolgen eines beweglichen Aufnahmemotivs AM zu erzeugen. Für das Scharfstellen des Kameraobjektivs 5A der Kamera 5 kann sich dessen Oberfläche nicht exakt in einer der momentanen Fokusentfernung des Kameraobjektivs 5A entsprechenden Objektebene befinden, da auch der Inhalt innerhalb eines gewissen Abstandsbereichs, der die Objektebene sowie die Bereiche davor und dahinter erfasst, vom Kameraobjektiv 5A scharf auf den Aufnahmesensor 5B der Bewegtbild-Kamera 5 abgebildet wird. Die Auslegung dieses als Fokusbereich oder auch Schärfentiefe ST bezeichneten Abstandsbereichs entlang der optischen Achse hängt insbesondere auch von der momentan eingestellten Blendenzahl des Kameraobjektivs 5A ab.

Je schmaler der Fokusbereich bzw. die Schärfentiefe ST ist, desto präziser bzw. selektiver ist die Fokussierung, d.h. die Anpassung der Fokusentfernung des Kameraobjektivs 5A kann an den Abstand eines oder mehrerer scharf abzubildender Objekte der jeweiligen Szenerie erfolgen, um sicherzustellen, dass die Objekte bzw. Aufnahmemotive AM während einer Aufnahme in dem Fokusbereich des Kameraobjektivs 5A liegen. Verändern die scharf abzubildenden Objekte während der Aufnahme durch die Bewegtbild-Kamera 5 ihren Abstand von dem Kameraobjektiv 5A der Bewegtbild-Kamera 5, kann mithilfe des erfindungsgemäßen Kamera-Assistenzsystems 1 die Fokusentfernung präzise nachgeführt werden. Ebenso kann die Fokusentfernung so verändert werden, dass zunächst ein oder mehrerer Objekte in einem ersten Abstand scharf abgebildet werden, dann aber ein oder mehrere Objekte in einem anderen Abstand scharf abgebildet werden. Das erfindungsgemäße Kamera-Assistenzsystem 1 erlaubt es einem Nutzer, die Fokuseinstellung kontinuierlich zu kontrollieren, um sie an den veränderten Abstand des sich vor dem Kameraobjektiv 5A bewegenden Aufnahmemotivs AM anzupassen. Hierdurch kann die Funktion des Scharfstellens des Kameraobjektivs 5A, das auch als Schärfenziehen bezeichnet wird, mithilfe des erfindungsgemäßen Kamera-Systems 1 wirksam unterstützt werden. Die manuelle Fokussierung bzw. das Scharfziehen kann beispielsweise durch den Kameramann selbst oder durch einen Kameraassistenten bzw. einem speziell dafür zuständigen sogenannten Fokuspuller ausgeführt werden.

Für ein präzises Fokussieren bzw. Scharfstellen kann bei einer möglichen Ausführungsform die Möglichkeit für eine momentane kontinuierliche Einstellung der Fokuslage FL vorgesehen werden. Beispielsweise kann das Scharfstellen bzw. Fokussieren anhand einer Skala erfolgen, die auf einem oder neben einem für das Verstellen der Fokusentfernung betätigbaren Drehknopf aufgedruckt ist. Die bei dem erfindungsgemäßen Kamera-Assistenzsystem 1 bestehende Möglichkeit einer Darstellung für eine Fokuseinstellung mithilfe der Schärfenebene SE, wie in den Figuren 7A, 7B dargestellt, sowie die Möglichkeit der Darstellung einer Schärfentiefe ST gemäß Figuren 8A, 8B, erleichtern es dem Nutzer erheblich, die geeignetste Fokuseinstellung vorzunehmen und kontinuierlich während der Aufnahme entsprechend nachzuführen. Die Fokussierung bzw. das Scharfziehen wird somit erheblich erleichtert und kann intuitiv durch den jeweiligen Nutzer vorgenommen werden. Weiterhin hat der Nutzer die Möglichkeit, die Darstellung der Schärfenebene SE und der Schärfentiefe ST entsprechend seinen Präferenzen bzw. Gewohnheiten einzustellen, beispielsweise durch Veränderung des Blickpunktes auf die Schärfenebene SE oder durch die Einstellung des Skalierungsfaktors SF.

Bei einer bevorzugten Ausführungsform ist die von dem Nutzer gewählte Darstellungskonfiguration nutzerspezifisch abgespeichert, sodass der Nutzer bei der nächsten Aufnahme mithilfe der Bewegtbild-Kamera 5 die für ihn präferierten Darstellungsparameter direkt wiederverwenden kann. Dabei hat der Nutzer optional zusätzlich die Möglichkeit, weitere Informationen zu konfigurieren, die auf der Anzeigefläche der Anzeigeeinheit 3 zusammen mit der Schärfenebene SE oder der Schärfentiefe ST dargestellt werden sollen. Beispielsweise kann der Nutzer vorkonfigurieren, welche weiteren Aufnahmeparameter P auf der Anzeigefläche der Anzeigeeinheit 3 für ihn angezeigt werden sollen. Weiterhin kann der Nutzer konfigurieren, ob die am Rand befindliche Schärfeskala eingeblendet werden soll oder ausgeblendet werden soll. Weiterhin hat der Nutzer bei einer möglichen Ausführungsvariante die Möglichkeit, zwischen verschiedenen Maßeinheiten umzuschalten, insbesondere SI-Einheiten (beispielsweise Meter) oder anderen weitverbreiteten Messeinheiten (beispielsweise Inch). Beispielsweise kann die in Fig. 8B dargestellte Schärfentiefe ST in Millimeter, Zentimeter auf einer Skala angezeigt werden, sofern der Nutzer dies entsprechend für sich vorkonfiguriert. Bei einer möglichen Implementierung kann sich der Nutzer gegenüber dem Kamera-Assistenzsystem 1 identifizieren, sodass die für ihn gewünschte Darstellungskonfiguration automatisch geladen und ausgeführt wird. Der Nutzer hat zudem die Möglichkeit, die optische Darstellung der semitransparenten Ebenen SE, beispielsweise hinsichtlich der Farbe der semitransparenten Ebene SE, einzustellen. Bei der Anzeigefläche der Anzeigeeinheit 3 kann es sich um eine LCD-, TFT- oder OLED-Anzeigefläche handeln. Diese Anzeigefläche umfasst eine zweidimensionale Matrix von Bildpunkten, um die Bildinformation wiederzugeben. Bei einer möglichen Ausführungsmöglichkeit besteht die Möglichkeit für den Nutzer, die Auflösung der Anzeigefläche der Anzeigeeinheit 3 einzustellen.

Bei einer möglichen Ausführungsform des erfindungsgemäßen Kamera-Assistenzsystems 1 erfolgt die Ermittlung der momentanen Schärfentiefe ST durch die Bildverarbeitungseinheit 2 anhand der eingestellten Irisblendenöffnung BÖ der Blende, der eingestellten Fokuslage FL und ggf. der eingestellten Brennweite des Kameraobjektivs 5A mithilfe einer Schärfentiefentabelle. Dabei kann für unterschiedliche Kameraobjektivtypen jeweils eine zugehörige Schärfentiefentabelle in einem Speicher hinterlegt sein, auf den die Bildverarbeitungseinheit 2 zur Berechnung der momentanen Schärfentiefe ST Zugriff hat. Bei einer möglichen Ausführungsvariante übermittelt das Kameraobjektiv 5A über eine Schnittstelle den Kameraobjektivtyp an die Bildverarbeitungseinheit 2. Anhand des erhaltenen Kameraobjektivtyps kann die Bildverarbeitungseinheit 2 eine entsprechende Schärfentiefentabelle aus dem Speicher auslesen und zur Berechnung der Schärfentiefe ST heranziehen. Bei einer möglichen Ausführungsform sind die Schärfentiefentabellen für verschiedene Kameraobjektivtypen in einem lokalen Datenspeicher des Kamera-Assistenzsystems 1 hinterlegt. Bei einer alternativen Ausführungsform ist die Schärfentiefentabelle in einem Speicher der Kamera 5 hinterlegt und wird über die Schnittstelle an die Bildverarbeitungseinheit 2 übertragen.

Bei einer weiteren möglichen Ausführungsform hat der Nutzer die Möglichkeit, eine Anzeige der verwendeten Schärfentiefentabelle auf der Anzeigefläche der Anzeigeeinheit 3 auszuwählen. Beispielsweise wird dem Nutzer nach entsprechender Eingabe auf der Anzeigefläche der Anzeigeeinheit 3 der Typ des aktuell verwendeten Kameraobjektivs 5A und optional zusätzlich die zugehörige Schärfentiefentabelle angezeigt. Hierdurch erhält der Nutzer eine bessere Kontrolle, die dem Anwendungszweck entspricht.

Das in den Figuren 1, 2 dargestellte Kamera-Assistenzsystem 1 bildet bei einer möglichen Ausführungsform ein eigenes Gerät, das über Schnittstellen mit den übrigen Einheiten des Kamera-Systems 1 verbunden werden kann. Alternativ kann das Kamera-Assistenzsystem 1 auch in eine Kamera bzw. ein Kamera-System integriert werden. Bei einer möglichen Ausführungsform kann das Kamera-Assistenzsystem 1 auch modular aufgebaut werden. Bei dieser Ausführungsform können die möglichen Module des Kamera-Assistenzsystems 1 zum Beispiel aus einem Modul für die Tiefenmesseinheit 8, aus einem Modul für die Bildverarbeitungseinheit 2 des Kamera-Assistenzsystems 1, aus einem Anzeigemodul 3 für die Anzeigeeinheit 3 sowie aus einem Modul für die Abbildungsschärfe-Detektionseinheit 4 bestehen. Die verschiedenen Funktionen können auch in anderer Weise zu Modulen kombiniert werden. Die verschiedenen Module können für verschiedene Implementierungsvarianten vorgesehen sein. Beispielsweise besteht für den Nutzer die Möglichkeit, sich sein bevorzugtes Kamera-Assistenzsystem 1 durch Zusammenfügen der jeweils geeigneten Module aufzubauen. Die verschiedenen Module können bei einer möglichen Implementierung über entsprechende Schnittstellen miteinander elektromechanisch verbunden werden und sind bei Bedarf austauschbar. Weitere Ausführungsvarianten sind möglich. Bei einer möglichen Ausführungsform verfügt das Kamera-Assistenzsystem 1 über ein eigenes Stromversorgungsmodul, welches von dem übrigen Kamera-System 1 bzw. der Kamera 5 unabhängig funktionsfähig ist.

Bezugszeichenliste

| | |
|---|---|
| 1 | Kamera-Assistenzsystem |
| 2 | Bildverarbeitungseinheit |
| 3 | Anzeigeeinheit |
| 4 | Abbildungsschärfe-Detektionseinheit |
| 5 | Kamera |
| 5A | Kameraobjektiv |
| 5B | Aufnahmesensor |
| 6 | Einstelleinheit |
| 7 | Bildspeicher |
| 8 | Tiefenmesseinheit |
| 9 | Sensor |
| 10 | Prozessor der Tiefenmesseinheit |
| AM | Aufnahmemotiv |
| BF | Blickfeld |
| BÖ | Blendenöffnung |
| BW | Brennweite |
| FL | Fokuslage |
| FM | Fokusmetrik |
| KB | Kamerabild |
| NKB | Nutz-Kamerabild |
| P | Aufnahmeparameter |
| SD | Sensordaten |
| SE | Schärfenebene |
| SF | Skalierungsfaktor |
| ST | Schärfentiefe |
| TK | Tiefenkarte |
| UK | Unschärfekreis |

**Patentansprüche**

1. Kamera-Assistenzsystem (1) mit:

    einer Bildverarbeitungseinheit (2), welche ein von einer Kamera (5) empfangenes Kamerabild (KB) eines Aufnahmemotives (AM) zur Erzeugung eines Nutz-Kamerabildes (NKB) verarbeitet, wobei das von der Kamera (5) empfangene Kamerabild (KB) auf eine virtuelle dreidimensionale Projektionsfläche (PF) projiziert wird, deren Höhenwerte einer lokalen Abbildungsschärfe (AS) des empfangenen Kamerabildes (KB) entspricht; und mit
    einer Anzeigeeinheit (3), welche das von der Bildverarbeitungseinheit (2) auf die virtuelle dreidimensionale Projektionsfläche (PF) projizierte Kamerabild (KB) anzeigt.

2. Kamera-Assistenzsystem (1) nach Anspruch 1, wobei die lokale Abbildungsschärfe (AS) des empfangenen Kamerabildes (KB) durch eine Abbildungsschärfe-Detektionseinheit (4) des Kamera-Assistenzsystems (1) bestimmt wird, welche bevorzugt eine Kontrastdetektionseinheit oder eine Phasendetektionseinheit aufweist, und wobei die Abbildungsschärfe-Detektionseinheit (4) optional die lokale Abbildungsschärfe (AS) des empfangenen Kamerabildes (KB) in Abhängigkeit von mindestens einer Fokusmetrik (FM) berechnet.

3. Kamera-Assistenzsystem (1) nach Anspruch 2, wobei die Abbildungsschärfe-Detektionseinheit (4) auf Basis von ermittelten lokalen Kontrastwerten des von der Kamera (5) empfangenen unverarbeiteten Kamerabildes (KB) und/oder auf Basis von ermittelten lokalen Kontrastwerten des von der Bildverarbeitungseinheit (2) daraus erzeugten verarbeiteten Nutz-Kamerabildes(NKB) die Abbildungsschärfe (AS) des empfangenen Kamerabildes (KB) anhand einer kontrastwertbasierten Fokusmetrik (FM) berechnet.

4. Kamera-Assistenzsystem (1) nach Anspruch 3, wobei die Abbildungsschärfe-Detektionseinheit (4) die lokalen Kontrastwerte des von der Kamera (5) empfangenen zweidimensionalen Kamerabildes (KB) und/oder des daraus erzeugten zweidimensionalen Nutz-Kamerabildes (NKB) jeweils für einzelne Pixel des Kamerabildes (KB; NKB) oder jeweils für eine Gruppe von Pixeln des Kamerabildes (KB; NKB) ermittelt.

5. Kamera-Assistenzsystem (1) nach einem der vorangehenden Ansprüche 1 bis 4,
wobei das von der Kamera (5) empfangene Kamerabild (KB) von einem Ortsfrequenzfilter zur Reduzierung einer Fragmentierung des auf der Anzeigeeinheit (3) angezeigten auf die virtuelle Projektionsfläche (PF) projizierten Kamerabildes (KB) gefiltert wird.

6. Kamera-Assistenzsystem (1) nach einem der vorangehenden Ansprüche 1 bis 5,
wobei die Bildverarbeitungseinheit (2) auf Basis des auf die virtuelle dreidimensionale Projektionsfläche (PF) projizierten Kamerabildes (KB) ein Stereobildpaar berechnet, welches auf einer 3D-Anzeigeeinheit (3) des Kamera-Assistenzsystems (1) angezeigt wird, und/oder wobei durch die Bildverarbeitungseinheit (2) auf Basis des auf die virtuelle dreidimensionale Projektionsfläche (PF) projizierten Kamerabildes (KB) eine Pseudo-3D-Darstellung mit künstlich generierten Schatten oder eine Schrägansicht berechnet wird, welche auf einer 2D-Anzeigeeinheit (3) des Kamera-Assistenzsystems (1) angezeigt wird.

7. Kamera-Assistenzsystem (1) nach einem der vorangehenden Ansprüche 1 bis 6,
wobei die Bildverarbeitungseinheit (2) einen Erkennungsalgorithmus zur Erkennung signifikanter Objektteile des in dem empfangenen Kamerabild (KB) enthaltenen Aufnahmemotivs (AM) ausführt und über eine Schnittstelle entsprechende Bildausschnitte innerhalb des Kamerabildes (KB) mit erhöhter Auflösung von der Kamera (5) anfordert.

8. Kamera-Assistenzsystem (1) nach einem der vorangehenden Ansprüche 1 bis 7,

wobei das Kamera-Assistenzsystem (1) eine Tiefenmesseinheit (8) aufweist, die eine Tiefenkarte (TK) bereitstellt, welche von der Bildverarbeitungseinheit (2) zur Erzeugung der virtuellen dreidimensionalen Projektionsfläche (PF) verarbeitet wird,
wobei die Tiefenmesseinheit (8) bevorzugt dazu geeignet ist eine momentane Entfernung von Aufnahmeobjekten, insbesondere des Aufnahmemotivs (AM), von der Kamera (5) durch Messung einer Laufzeit oder durch Messung einer Phasenverschiebung von Ultraschallwellen oder von elektromagnetischen Wellen, zu messen und eine entsprechende Tiefenkarte (TK) zu generieren,
wobei die Tiefenmesseinheit (8) dazu besonders bevorzugt mindestens einen Sensor (9) zur Erfassung von elektromagnetischen Wellen, insbesondere von Lichtwellen, und/oder einen Sensor (9) zur Erfassung von Schallwellen, insbesondere von Ultraschallwellen, aufweist.

9. Kamera-Assistenzsystem (1) nach Anspruch 8,
wobei die Tiefenmesseinheit (8) mindestens einen optischen Kamerasensor (9) zur Erzeugung eines oder mehrerer Tiefenbilder aufweist, die durch einen Prozessor (10) der Tiefenmesseinheit (8) zur Generierung der Tiefenkarte (TK) verarbeitet werden, wobei bevorzugt eine Stereo-Bildkamera vorgesehen ist, die optische Kamerasensoren zur Erzeugung von Stereo-Kamerabildpaaren aufweist, die durch den Prozessor (10) der Tiefenmesseinheit (8) zur Generierung der Tiefenkarte (TK) verarbeitet werden.

10. Kamera-Assistenzsystem (1) nach einem der vorangehenden Ansprüche 1 bis 9,

wobei eine Einstelleinheit (6) zur Einstellung von Aufnahmeparametern (P) der Kamera (5) vorgesehen ist,
wobei die durch die Einstelleinheit (6) des Kamera-Assistenzsystems (1) einstellbaren Aufnahmeparameter (P) bevorzugt eine Fokuslage (FL), eine Irisblendenöffnung (BÖ) und eine Brennweite (BW) eines Kameraobjektives (5A) der Kamera (5) sowie eine Bildaufnahmefrequenz und eine Verschlusszeit umfassen.

11. Kamera-Assistenzsystem (1) nach Anspruch 10,

wobei die Bildverarbeitungseinheit (2) über eine Schnittstelle die durch die Einstelleinheit (6) des Kamera-Assistenzsystems (1) eingestellte Fokuslage (FL) erhält und als semitransparente Schärfenebene (SE) dem auf die virtuelle dreidimensionale Projektionsfläche (PF) projizierten Kamerabild (KB) zur Anzeige auf der Anzeigeeinheit (3) des Kamera-Assistenzsystems (1) überlagert,
wobei die semitransparente Schärfenebene (SE) bevorzugt eine Schärfeskala schneidet, die an einem Rand der Anzeigeeinheit (3) des Kamera-Assistenzsystems (1) angezeigt wird.

12. Kamera-Assistenzsystem (1) nach Anspruch 10,
wobei die Bildverarbeitungseinheit (2) anhand einer eingestellten Irisblendenöffnung (BÖ), einer eingestellten Fokuslage (FL) und/oder einer eingestellten Brennweite (BW) des aktuell verwendeten Kameraobjektives (5A) der Kamera (5) eine momentane Schärfentiefe (ST) ermittelt.

13. Kamera-Assistenzsystem (1) nach Anspruch 10,

wobei die Bildverarbeitungseinheit (2) dem auf die virtuelle dreidimensionale Projektionsfläche (PF) projizierten Kamerabild (KB) eine semitransparente Ebene (SE$_v$) zur Darstellung einer vorderen Grenze einer Schärfentiefe (ST) und eine weitere semitransparente Ebene (SE$_h$) zur Darstellung einer hinteren Grenze der Schärfentiefe (ST) zur Anzeige auf der Anzeigeeinheit (3) des Kamera-Assistenzsystems (1) überlagert.

14. Kamera-Assistenzsystem (1) nach Anspruch 10 oder 11,
    wobei die Bildverarbeitungseinheit (2) über eine Schnittstelle einen Typ des Kameraobjektivs (5A) der Kamera (5) übermittelt erhält und aus einer zugehörigen gespeicherten Schärfentiefentabelle des Kameraobjektivtyps anhand der eingestellten Irisblendenöffnung (BÖ) und der eingestellten Fokuslage (FL) und/oder der eingestellten Brennweite (BW) des aktuell verwendeten Kameraobjektivs (5A) die momentane Schärfentiefe (ST) ermittelt.

15. Kamera-Assistenzsystem (1) nach einem der vorangehenden Ansprüche 8 bis 14,
    wobei die Bildverarbeitungseinheit (2) anhand der von der Tiefenmesseinheit (8) bereitgestellte Tiefenkarte (TK) und anhand des von der Kamera (5) erhaltenen Kamerabildes (KB) eine Kalibrierung ausführt, welche die Relativlage der Tiefenmesseinheit (8) zu der Kamera (5) berücksichtigt.

16. Kamera-Assistenzsystem nach einem der vorangehenden Ansprüche 8 bis 12,
    wobei die Bildverarbeitungseinheit (2) anhand von durch die Tiefenmesseinheit (8) im Zeitverlauf bereitgestellten Tiefenkarten (TK) einen Bewegungsvektor und eine vermutliche zukünftige Position des Aufnahmemotivs (AM) innerhalb eines von der Kamera (5) empfangenen Kamerabildes (KB) ermittelt und daraus eine Veränderung der lokalen Abbildungsschärfe (AS) des empfangenen Kamerabildes (KB) ableitet.

17. Kamera (5) mit einem Kamera-Assistenzsystem (1) nach einem der vorangehenden Ansprüche 1 bis 16 zur Unterstützung bei der Fokussierung der Kamera (5), wobei die Kamera (5) bevorzugt eine Bewegtbild-Kamera aufweist.

18. Verfahren zur Unterstützung bei der Fokussierung einer Kamera (5) mit den Schritten:

    Empfangen (S1) eines Kamerabildes (KB) eines Aufnahmemotivs (AM) durch eine Bildverarbeitungseinheit (2) von der Kamera (5);
    Projizieren (S2) des empfangenen Kamerabildes (KB) durch die Bildverarbeitungseinheit (2) auf eine virtuelle dreidimensionale Projektionsfläche (PF) deren Höhenwerte einer lokalen Abbildungsschärfe (AS) des empfangenen Kamerabildes (KB) entspricht; und
Anzeigen (S3) des auf der virtuellen dreidimensionalen Projektionsfläche (PF) projizierten Kamerabildes (KB) auf einer Anzeigeeinheit (3).

# FIG 1

EP 4 304 189 A1

**FIG 2**

EP 4 304 189 A1

## FIG 3

FIG 4

FIG 5

FIG 6

FIG 7A

FIG 7B

## FIG 8A

## FIG 8B

Europäisches
Patentamt

European
Patent Office

Office européen
des brevets

**EUROPÄISCHER RECHERCHENBERICHT**

Nummer der Anmeldung

**EP 23 18 4290**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2012 203352 A (PANASONIC CORP) 22. Oktober 2012 (2012-10-22) | 1,6,8-18 | INV. H04N23/62 |
| Y | * Zusammenfassung * * Absätze [0014] – [0033] * * Abbildungen 1-8b * ----- | 2-5,7 | G03B13/18 G03B13/30 G03B13/32 G03B17/20 |
| Y | US 2008/278618 A1 (MATSUMOTO HISAYUKI [JP] ET AL) 13. November 2008 (2008-11-13) * Zusammenfassung * * Absätze [0014] – [0017], [0264] * * Abbildungen 1-25 * ----- | 2,5 | H04N23/63 H04N23/67 |
| Y | US 2018/278837 A1 (LEE SEUNG-HAN [KR] ET AL) 27. September 2018 (2018-09-27) * Zusammenfassung * * Absätze [0004] – [0011], [0082] * * Abbildungen 1-15C * ----- | 2-4,7 | |
| A | US 2022/035226 A1 (WAITZ MARTIN [AT]) 3. Februar 2022 (2022-02-03) * Zusammenfassung * * Absätze [0001] – [0041], [0091] – [0093] * * Abbildungen 1-2 * ----- | 1-18 | |

RECHERCHIERTE SACHGEBIETE (IPC)

H04N
G03D
G03B

Der vorliegende Recherchenbericht wurde für alle Patentansprüche erstellt

| Recherchenort | Abschlußdatum der Recherche | Prüfer |
|---|---|---|
| München | 15. November 2023 | Horstmannshoff, Jens |

**ANHANG ZUM EUROPÄISCHEN RECHERCHENBERICHT**
**ÜBER DIE EUROPÄISCHE PATENTANMELDUNG NR.**

EP 23 18 4290

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-11-2023

| Im Recherchenbericht angeführtes Patentdokument | Datum der Veröffentlichung | Mitglied(er) der Patentfamilie | Datum der Veröffentlichung |
|---|---|---|---|
| JP 2012203352 A | 22-10-2012 | JP 2012203352 A | 22-10-2012 |
| | | WO 2012132277 A1 | 04-10-2012 |
| US 2008278618 A1 | 13-11-2008 | CN 101303510 A | 12-11-2008 |
| | | JP 2008276115 A | 13-11-2008 |
| | | US 2008278618 A1 | 13-11-2008 |
| US 2018278837 A1 | 27-09-2018 | CN 108632529 A | 09-10-2018 |
| | | EP 3379821 A1 | 26-09-2018 |
| | | KR 20180108280 A | 04-10-2018 |
| | | US 2018278837 A1 | 27-09-2018 |
| US 2022035226 A1 | 03-02-2022 | AT 521845 A1 | 15-05-2020 |
| | | EP 3857303 A1 | 04-08-2021 |
| | | EP 3857304 A2 | 04-08-2021 |
| | | US 2022030157 A1 | 27-01-2022 |
| | | US 2022035226 A1 | 03-02-2022 |
| | | WO 2020061604 A1 | 02-04-2020 |
| | | WO 2020061605 A2 | 02-04-2020 |

EPO FORM P0461

Für nähere Einzelheiten zu diesem Anhang : siehe Amtsblatt des Europäischen Patentamts, Nr.12/82